# EUROPEAN PATENT APPLICATION

(11) **EP 4 827 020 A1**
(43) Date of publication of application: **21.10.2026**
(21) Application number: 24914981.6
(22) Date of filing: 30.10.2024
(51) Int. Cl.: H04J 11/00

(54) **COMMUNICATION METHOD AND APPARATUS**

(30) Priority: 04.01.2024 CN 202410015879
(71) Applicant: Huawei Technologies Co., Ltd., Shenzhen, Guangdong 518129 (CN)
(72) Inventor: SHI, Meng, Shenzhen, Guangdong 518129 (CN); LIAO, Shuri, Shenzhen, Guangdong 518129 (CN); ZHANG, Xiaoyu, Shenzhen, Guangdong 518129 (CN); DOU, Shengyue, Shenzhen, Guangdong 518129 (CN)
(74) Representative: Pfenning, Meinig & Partner mbB
(86) International application number: PCT/CN2024/128523
(87) International publication number: WO 2025/145764

(57) **Abstract**

A communication method and apparatus are provided. The method includes: a first apparatus may receive first information from a second apparatus. The first information is used to determine a first correspondence, where the first correspondence is a correspondence between a plurality of first areas and a plurality of SSBs within a first time period, and the plurality of first areas are a plurality of areas within a coverage area of the second apparatus in the first time period. The first apparatus may determine, based on the first correspondence, a correspondence between a plurality of second areas and a plurality of SSBs in a second time period, where the second time period is after the first time period, and the plurality of second areas are a plurality of areas within a coverage area of the second apparatus in the second time period. By using this method, the first apparatus can quickly and accurately determine, based on the correspondence between the plurality of areas within the coverage area of the second apparatus and the plurality of SSBs in a time period, the correspondence between the plurality of areas within the coverage area of the second apparatus and the plurality of SSBs in a subsequent time period.

## Description

### CROSS-REFERENCE TO RELATED APPLICATIONS

This application claims priority to Chinese Patent Application No. 202410015879.0, filed with the China National Intellectual Property Administration on January 4, 2024, and entitled "Communication Method and Apparatus", which is incorporated herein by reference in its entirety.

### TECHNICAL FIELD

This application relates to the field of communication technologies, and in particular, to a communication method and apparatus.

### BACKGROUND

In a wireless communications system, an access network device may send measurement configuration information to a terminal. The terminal may measure a synchronization signal and physical broadcast channel (physical broadcast channel, PBCH) block (synchronization signal and PBCH block, SSB) based on the measurement configuration information, to implement mobility management. Because the SSB is not continuous in the time domain, the terminal does not need to continuously search for and measure the SSB in the time domain, but only needs to measure the SSB within a measurement time window in which the SSB can be locked. Therefore, an SSB-based measurement timing configuration (SSB-based measurement timing configuration, SMTC) is currently introduced into the measurement configuration information for the SSB, where the SMTC may be used to configure a measurement time window; accordingly, the terminal may measure the SSB within the measurement time window configured by the SMTC.

For non-terrestrial networks (non-terrestrial networks, NTN), NTN provides seamless coverage for terminals by deploying functions of access network devices or partial functions of access network devices on non-terrestrial devices such as high altitude platforms or satellites.

However, taking a satellite as an example, due to the larger coverage area of the satellite and the large number of beams (for example, the number of beams may reach hundreds or even thousands). How to determine the correspondence between an area and an SSB in communication systems such as NTN requires further research.

### SUMMARY

This application provides a communication method and apparatus, to determine the correspondence between an area and an SSB in communication systems such as NTN.

**According to a first aspect**, an embodiment of this application provides a communication method, where the method may be applied to a first apparatus. The first apparatus may be a terminal or a module (for example, a circuit, a chip, a chip system, or a processor) in a terminal, or may be a logical node, a logical module, or software that can implement all or some functions of the terminal. The method may include: The first apparatus may receive first information from a second apparatus, where the first information is used to determine a first correspondence, the first correspondence is a correspondence between a plurality of first areas and a plurality of SSBs in a first time period, and the plurality of first areas are a plurality of areas within the coverage area of the second apparatus in the first time period. Then, the first apparatus may determine a second correspondence based on the first correspondence, where the second correspondence is a correspondence between a plurality of second areas and a plurality of SSBs in a second time period, the second time period is after the first time period, and the plurality of second areas are a plurality of areas within the coverage area of the second apparatus in the second time period.

By using this method, the correspondence between the plurality of areas covered by the second apparatus and the plurality of SSBs remains unchanged within the first time period, and is always the first correspondence. After the first time period, there is an association relationship between the correspondence between the plurality of areas covered by the second apparatus and the plurality of SSBs and the first correspondence. The first apparatus may determine, based on the association relationship and the first correspondence, the correspondence between the plurality of areas covered by the second apparatus and the plurality of SSBs after the first time period, so that the first apparatus can determine an area in which the first apparatus is located and coverage information around the area, thereby improving mobility management performance, implementing precise SSB measurement, and reducing measurement overheads.

In a possible design, the first apparatus may determine the second correspondence based on the start time of the first time period, the duration of the first time period, and the first correspondence, so that the second correspondence can be quickly and accurately determined.

In a possible design, the first correspondence may include M rows and N columns, where M may be a quantity of areas covered by the second apparatus along the first direction, N may be a quantity of areas covered by the second apparatus along the second direction, the first direction is a movement direction of the second apparatus, and M and N are positive integers. The second correspondence may also include M rows and N columns. The last K rows in the first correspondence are the first K rows in the second correspondence; and the first M-K rows in the first correspondence are the last M-K rows in the second correspondence. K may be determined based on the number of areas that the second apparatus crosses from the first time period to the second time period. Through this design, the first apparatus may quickly and accurately determine the second correspondence based on the first correspondence.

In a possible design, the first apparatus may receive second information from the second apparatus, where the second information may be used to indicate a duration of the first time period, so that the second apparatus can accurately indicate the duration of the first time period to the first apparatus. Alternatively, the first apparatus may receive third information from the second apparatus, where the third information is used to indicate a radius, a diameter, or a side length of an area in which the first apparatus is located in the plurality of first areas, and the radius, the diameter, or the side length of the area in which the first apparatus is located may be used to determine the duration of the first time period. In this way, the first apparatus may determine the duration of the first time period by itself, and the second apparatus does not need to indicate the duration of the first time period to the first apparatus, thereby reducing signaling overheads.

In a possible design, the first apparatus may receive fourth information from the second apparatus, where the fourth information may be used to indicate a start time of the first time period. Through this design, the second apparatus may indicate the start time of the first time period to the first apparatus, so that the first time period determined by the first apparatus is the same as the first time period determined by the second apparatus, thereby avoiding an inconsistency between the first apparatus and the second apparatus in understanding an effective time of the first correspondence.

In a possible design, the first apparatus may receive, from the second apparatus, fifth information during cell search and/or a random access process, where the fifth information is used to determine a third correspondence, where the third correspondence is a correspondence between a plurality of third areas and a plurality of SSBs in a third time period, and the plurality of third areas are a plurality of areas within the coverage area of the second apparatus in the third time period. After the first apparatus completes random access, the first apparatus receives the first information from the second apparatus. It should be understood that a time at which the first apparatus receives the fifth information may be a time point in the middle of the third time period. If the first apparatus uses the time at which the fifth information is received as a start time of the third time period, and determines, based on the start time, a correspondence between a plurality of areas within the coverage area of the second apparatus and a plurality of SSBs in subsequent time periods, an incorrect correspondence may be obtained. Through this design, after the first apparatus completes random access, the first apparatus may receive the first information from the second apparatus, so as to correct, based on the first information, the correspondence between the plurality of areas within the coverage area of the second apparatus and the plurality of SSBs, thereby making the first apparatus and the second apparatus have a consistent understanding of the correspondence between the plurality of areas within the coverage area of the second apparatus and the plurality of SSBs.

In a possible design, after a first time length following the completion of random access by the first apparatus, the first apparatus may receive first information from the second apparatus. The first time length is determined based on the location of the first apparatus at a second time, the coverage area of the region where the first apparatus is located, and the location information of the second apparatus, where the second time is related to the time when the first apparatus receives the first information. Through this design, the first apparatus can quickly and accurately determine the time when the first information is to be received.

In another possible design, after a first time length following the completion of random access by the first apparatus, the first apparatus may receive first information from the second apparatus. The first time length is determined based on a first parameter, a first range, and the location information of the second apparatus. The first parameter is determined based on a line connecting a first point at a second time and the second apparatus, where the first point is a reference point in the region where the first apparatus is located, and the first range is a range of a parameter determined based on the line connecting the first point and the second apparatus when the first apparatus is located in the region where the first apparatus is located, where the second time is related to the time when the first apparatus receives the first information. Through this design, the first apparatus can quickly and accurately determine the time when the first information is to be received.

In a possible design, the first apparatus may receive range indication information from the second apparatus, where the range indication information may be used to indicate the first range. Through this design, the first apparatus can obtain the first range in a timely manner.

In a possible design, the first parameter may be an included angle between a line connecting the first point at the second time and the second apparatus and a reference plane, where the first range is a range of the included angle between the line connecting the first point and the second apparatus and the reference plane when the first apparatus is located in an area where the first apparatus is located; or, the first parameter may be a length of the line connecting the first point and the second apparatus at the second time after being mapped to the reference plane, where the first range is a range of the length of the line connecting the first point and the second apparatus after being mapped to the reference plane when the first apparatus is located in an area where the first apparatus is located. Through this design, the first apparatus can quickly and accurately determine the first duration.

In a possible design, before the first apparatus receives the first information from the second apparatus, the method may further include: the first apparatus receiving sixth information from the second apparatus, where the sixth information may be used to determine a fourth correspondence, the fourth correspondence is a correspondence between a plurality of fourth areas and a plurality of SSBs within a fourth time period, and the plurality of fourth areas are a plurality of areas within the coverage area of the second apparatus in the fourth time period. The first apparatus may receive the first indication information from the second apparatus, where the first indication information may be used to indicate that a correspondence between a plurality of areas within the coverage area of the second apparatus and a plurality of SSBs changes. Through this design, the second apparatus can trigger the first apparatus to update the correspondence between the plurality of areas within the coverage area of the second apparatus and the plurality of SSBs in a timely manner.

In a possible design, the first apparatus may receive the second indication information from the second apparatus, wherein the second indication information indicates whether a correspondence between a plurality of areas within the coverage area of the second apparatus and a plurality of SSBs is allowed to change. Through this design, the first apparatus can learn in time whether the correspondence between the plurality of areas in the coverage area of the second apparatus and the plurality of SSBs is variable, thereby being compatible with both a ground fixed area and a beam following an access network device.

In a possible design, a value of the second indication information falls within a first value range, and the value of the second indication information may be used to indicate that the correspondence between the plurality of areas in the coverage area of the second apparatus and the plurality of SSBs remains unchanged, and is used to indicate the correspondence between the plurality of areas in the coverage area of the second apparatus and the plurality of SSBs. Through this design, the first apparatus can determine, based on the value of the second indication information, whether the correspondence between the plurality of areas in the coverage area of the second apparatus and the plurality of SSBs is variable, without the need to indicate, by using additional information, whether the correspondence between the plurality of areas in the coverage area of the second apparatus and the plurality of SSBs is variable, thereby saving signaling overheads.

In a possible design, the first apparatus may determine the second correspondence based on the first correspondence and the first indication information after receiving the first indication information from the second apparatus. The first indication information may be used to indicate that a correspondence between a plurality of areas within the coverage of the second apparatus and a plurality of SSBs changes; and a start time of the second time period may be a time at which the first indication information is received. Through this design, the first apparatus can quickly and accurately determine the second correspondence.

In a possible design, the first correspondence includes M rows and N columns, where M is a quantity of areas in the coverage area of the second apparatus along a first direction, N is a quantity of areas in the coverage area of the second apparatus along a second direction, the first direction is a motion direction of the second apparatus, and M and N are positive integers. The second correspondence may also include M rows and N columns. The last row in the first correspondence is the first row in the second correspondence, and the first M-1 rows in the first correspondence are the last M-1 rows in the second correspondence. According to this design, the first apparatus can quickly and accurately determine the second correspondence based on the first correspondence.

In a possible design, the first information may be used to indicate at least one of the following:
a quantity of areas in the coverage of the plurality of first areas along the third direction;
a radius, a diameter, or a side length of each area in the plurality of first areas along the third direction;
a quantity of areas in the coverage of the plurality of first areas along the fourth direction;
a radius, a diameter, or a side length of each area in the plurality of first areas along the fourth direction;
a position of a reference region in the plurality of first regions;
an arrangement order of the plurality of SSBs in an initial correspondence between the plurality of first regions and the plurality of SSBs; or
an association relationship between the first correspondence and the initial correspondence.

According to this design, the first apparatus can quickly and accurately determine the first correspondence based on the first information.

In a possible design, the first apparatus may measure at least one of the plurality of SSBs based on the second correspondence within the second time period. According to this design, the first apparatus can measure some of the plurality of SSBs based on the second correspondence, thereby reducing a time for the first apparatus to measure the SSBs and reducing power consumption of the first apparatus.

**According to a second aspect**, an embodiment of this application provides a communication method, where the method may be applied to a second apparatus. The second apparatus may be an access network device or a module (for example, a circuit, a chip, a chip system, or a processor) in an access network device, or may be a logical node, a logical module, or software that can implement all or some functions of the access network device. The method may include: determining and sending first information by the second apparatus. The first information may be used to determine a first correspondence, where the first correspondence is a correspondence between a plurality of first areas and a plurality of synchronization signal and physical broadcast channel PBCH block SSBs in a first time period, and the plurality of first areas are a plurality of areas covered by the second apparatus in the first time period. The first correspondence may be used to determine a second correspondence, where the second correspondence is a correspondence between a plurality of second areas and a plurality of SSBs in a second time period, the second time period is after the first time period, and the plurality of second areas are a plurality of areas covered by the second apparatus in the second time period.

In a possible design, the start time of the first time period, the duration of the first time period, and the first correspondence may be used to determine the second correspondence.

In a possible design, the first correspondence may include M rows and N columns, where M is a quantity of areas covered by the second apparatus in the first direction, N is a quantity of areas covered by the second apparatus in the second direction, the first direction is a movement direction of the second apparatus, and M and N are positive integers. The second correspondence may also include M rows and N columns. The last K rows in the first correspondence are the first K rows in the second correspondence, and the first M-K rows in the first correspondence are the last M-K rows in the second correspondence. K is determined based on the number of areas that the second apparatus crosses from the first time period to the second time period.

In a possible design, the second apparatus may send second information to the first apparatus, where the second information may be used to indicate the duration of the first time period. Alternatively, the second apparatus may send third information to the first apparatus, where the third information may be used to indicate a radius, a diameter, or a side length of an area in which the first apparatus is located in the plurality of first areas, and the radius, the diameter, or the side length of the area in which the first apparatus is located is used to determine the duration.

In a possible design, the second apparatus may send fourth information to the first apparatus, where the fourth information may be used to indicate a start time of the first time period.

In a possible design, in a cell search and/or random access process of the first apparatus, the second apparatus may send fifth information to the first apparatus, where the fifth information may be used to determine a third correspondence, where the third correspondence is a correspondence between a plurality of third areas and a plurality of SSBs in a third time period, and the plurality of third areas are a plurality of areas within the coverage area of the second apparatus in the third time period. The first information is received by the first apparatus when the random access of the first apparatus is completed.

In a possible design, the first information is received by the first apparatus after a first duration following completion of random access by the first apparatus. The first duration is determined based on the location of the first apparatus at a second time, the coverage area of an area in which the first apparatus is located, and the location information of the second apparatus, where the second time is related to a time when the first apparatus receives the first information.

The first parameter is determined based on a connection line between the first point at the second time and the second apparatus, where the first point is a reference point in an area where the first apparatus is located, the first range is a range of a parameter determined based on the connection line between the first point and the second apparatus when the first apparatus is located in the area where the first apparatus is located, and the second time is related to a time when the first apparatus receives the first information.

In a possible design, the second apparatus may send range indication information to the first apparatus, where the range indication information may be used to indicate the first range.

In a possible design, the first parameter may be an included angle between the connection line between the first point at the second time and the second apparatus and a reference plane, where the first range is a range of included angles between the connection line between the first point and the second apparatus and the reference plane when the first apparatus is located in the area where the first apparatus is located; or the first parameter may be a length of the connection line between the first point at the second time and the second apparatus after the connection line is mapped to the reference plane, where the first range is a range of lengths of the connection line between the first point and the second apparatus after the connection line is mapped to the reference plane when the first apparatus is located in the area where the first apparatus is located.

In a possible design, before the second apparatus sends the first information to the first apparatus, the method further includes: The second apparatus may send sixth information to the first apparatus, where the sixth information may be used to determine a fourth correspondence, where the fourth correspondence is a correspondence between a plurality of fourth areas and a plurality of SSBs in a fourth time period, and the plurality of fourth areas are a plurality of areas within the coverage area of the second apparatus in the fourth time period. The second apparatus may send the first indication information to the first apparatus, where the first indication information is used to indicate that a correspondence between a plurality of areas within the coverage area of the second apparatus and a plurality of SSBs changes.

In a possible design, the second apparatus may send second indication information to the first apparatus, where the second indication information may be used to indicate whether the correspondence between the plurality of areas within the coverage area of the second apparatus and the plurality of SSBs is variable.

In a possible design, a value of the second indication information falls within a first value range, where the value of the second indication information may be used to indicate that the correspondence between the plurality of areas within the coverage area of the second apparatus and the plurality of SSBs remains unchanged, and the value is used to indicate the correspondence between the plurality of areas within the coverage area of the second apparatus and the plurality of SSBs.

In a possible design, the second apparatus may send first indication information to the first apparatus. The first indication information may be used to indicate that a correspondence between a plurality of areas within the coverage of the second apparatus and a plurality of SSBs changes; the first indication information and the first correspondence may be used to determine a second correspondence, where a start time of the second time period is a time at which the first apparatus receives the first indication information.

In a possible design, the first correspondence may include M rows and N columns, where M may be a quantity of areas within the coverage of the second apparatus along the first direction, N may be a quantity of areas within the coverage of the second apparatus along the second direction, the first direction is a movement direction of the second apparatus, and M and N are positive integers. The second correspondence may also include M rows and N columns. The last one row in the first correspondence is the first one row in the second correspondence, and the first M-1 rows in the first correspondence are the last M-1 rows in the second correspondence.

In a possible design, the first information may be used to indicate at least one of the following:
a quantity of areas in the coverage of the plurality of first areas along the third direction;
a radius, a diameter, or a side length of each area in the plurality of first areas along the third direction;
a quantity of areas in the coverage of the plurality of first areas along the fourth direction;
a radius, a diameter, or a side length of each area in the plurality of first areas along the fourth direction;
Positions of the reference regions in the plurality of first regions;
an arrangement order of the plurality of SSBs in an initial correspondence between the plurality of first regions and the plurality of SSBs; or
an association relationship between the first correspondence and the initial correspondence.

**According to a third aspect**, this application provides a communications apparatus. The communications apparatus may be a terminal or a module (for example, a circuit, a chip, a chip system, or a processor) in a terminal, or may be a logical node, a logical module, or software that can implement all or some functions of the terminal. The communications apparatus has a function of implementing the first aspect. For example, the communications apparatus includes a module, an element, or a means corresponding to the operations involved in the first aspect, where the module, the element, or the means may be implemented by software, or may be implemented by hardware, or may be implemented by hardware executing corresponding software.

In a possible design, the communications apparatus includes a processing unit. Optionally, the communications apparatus further includes an interface unit. The interface unit may be configured to receive and send signals to implement communication between the communications apparatus and another apparatus; and the processing unit may be configured to perform some internal operations of the communications apparatus. Functions performed by the processing unit and the interface unit may correspond to the operations involved in the first aspect.

In a possible design, the communication apparatus includes a processor, where the processor may be configured to couple to a memory. The memory may store a necessary computer program or instructions for implementing the functions involved in the first aspect. The processor may execute the computer program or instructions stored in the memory, and when the computer program or instructions are executed, the communication apparatus is enabled to implement the method in any possible design of the first aspect.

In a possible design, the communication apparatus includes a processor and a memory, where the memory may store a necessary computer program or instructions for implementing the functions involved in the first aspect. The processor may execute the computer program or instructions stored in the memory, and when the computer program or instructions are executed, the communication apparatus is enabled to implement the method in any possible design of the first aspect.

In a possible design, the communication apparatus includes a processor and an interface circuit, where the processor is configured to communicate with another apparatus through the interface circuit, and perform the method in any possible design of the first aspect.

**According to a fourth aspect**, this application provides a communications apparatus. The communications apparatus may be an access network device or a module (for example, a circuit, a chip, a chip system, or a processor) in an access network device, or may be a logical node, a logical module, or software that can implement all or some functions of the access network device. The communications apparatus has a function of implementing the second aspect. For example, the communications apparatus includes a module, an element, or a means corresponding to the operations involved in the second aspect, where the module, the element, or the means may be implemented by software, or may be implemented by hardware, or may be implemented by hardware executing corresponding software.

In a possible design, the communications apparatus includes a processing unit. Optionally, the communications apparatus further includes an interface unit. The interface unit may be configured to receive and send signals, so as to implement communication between the communications apparatus and another apparatus; and the processing unit may be configured to perform some internal operations of the communications apparatus. Functions performed by the processing unit and the interface unit may correspond to the operations involved in the second aspect.

In a possible design, the communication apparatus includes a processor, where the processor may be configured to couple to a memory. The memory may store a necessary computer program or instructions for implementing the functions of the second aspect. The processor may execute the computer program or instructions stored in the memory, and when the computer program or instructions are executed, the communication apparatus is enabled to implement the method in any possible design of the second aspect.

In a possible design, the communication apparatus includes a processor and a memory, where the memory may store a necessary computer program or instructions for implementing the functions of the second aspect. The processor may execute the computer program or instructions stored in the memory, and when the computer program or instructions are executed, the communication apparatus is enabled to implement the method in any possible design of the second aspect.

In a possible design, the communication apparatus includes a processor and an interface circuit, where the processor is configured to communicate with another apparatus through the interface circuit, and perform the method in any possible design of the second aspect.

It may be understood that, in the third aspect or the fourth aspect, the processor may be implemented by hardware or software. When the processor is implemented by hardware, the processor may be a logic circuit, an integrated circuit, or the like. When the processor is implemented by software, the processor may be a general-purpose processor, and the processor is implemented by reading software code stored in the memory. In addition, there may be one or more processors, and there may be one or more memories. The memory may be integrated with the processor, or the memory and the processor may be disposed separately. In a specific implementation process, the memory may be integrated with the processor on a same chip, or the memory and the processor may be separately disposed on different chips. A type of the memory and a manner of disposing the memory and the processor are not limited in embodiments of this application.

**According to a fifth aspect**, this application provides a communications system. The communications system may include the communications apparatus according to the third aspect and the communications apparatus according to the fourth aspect. For example, the communications system includes a terminal and an access network device, where the terminal is configured to perform the communication method provided in the first aspect, and the access network device is configured to perform the communication method provided in the second aspect.

**According to a sixth aspect**, this application provides a computer-readable storage medium, where the computer storage medium stores a computer program or instructions, and when the computer program or instructions are executed, the method in any one of the possible designs of either of the first aspect to the second aspect is implemented.

**According to a seventh aspect**, this application provides a computer program product, where the computer program product includes computer program code, and when the computer program code is run, the method in any one of the possible designs of either of the first aspect to the second aspect is implemented.

**According to an eighth aspect**, this application provides a chip, where the chip is configured to read a computer program stored in a memory, to perform the method in any one of the possible designs of either of the first aspect to the second aspect.

For technical effects that can be achieved in any one of the second aspect to the eighth aspect, refer to the descriptions of the technical effects that can be achieved in any one of the possible designs of the first aspect. Repeated parts are not described again.

### DESCRIPTION OF THE DRAWINGS

FIG. 1A to FIG. 1D are schematic diagrams of several system architectures applicable to embodiments of this application;
FIG. 2A to FIG. 2B are schematic diagrams of several application scenarios according to an embodiment of this application;
FIG. 3 is a flowchart of a communication method according to an embodiment of this application;
FIG. 4A to FIG. 4B are schematic diagrams of several correspondence according to an embodiment of this application;
FIG. 4C is a schematic diagram of yet another application scenario according to an embodiment of this application;
FIG. 5 is a flowchart of another communication method according to an embodiment of this application;
FIG. 6 is a flowchart of still another communication method according to an embodiment of this application;
FIG. 7 is a flowchart of yet another communication method according to an embodiment of this application;
FIG. 8 is a flowchart of still another communication method according to an embodiment of this application;
FIG. 9 is a schematic architectural diagram of a communication apparatus according to an embodiment of this application;
FIG. 10 is a schematic architectural diagram of another communication apparatus according to an embodiment of this application.

### DETAILED DESCRIPTION

The method provided in the embodiments of this application may be applied to an NTN communication scenario. In the NTN communication scenario, non-terrestrial access network devices such as an unmanned aerial vehicle (UAV), a high altitude platform station (HAPS), and a satellite may provide services such as data transmission and voice communication for a terminal. In addition, the NTN system may further include other non-terrestrial access network devices, which is not limited in this application. The NTN communication scenario may further support various mobile communication systems, for example, other communication systems such as a new radio (new radio, NR) system, a long term evolution (long term evolution, LTE) system, or a future communication system. This is not limited herein.

The method provided in the embodiments of this application may be applied to at least one of the following: a fourth generation (4th generation, 4G) communications system (for example, an LTE system), a fifth generation (5th generation, 5G) communications system (for example, an NR system), or various future communications systems (for example, a sixth generation (6th generation, 6G) communications system). The communication method provided in the embodiments of this application may also be applied to fields such as vehicle to everything (vehicle to everything, V2X) communication, Internet of Vehicles, and autonomous driving or assisted driving.

This application presents various aspects, embodiments, or features in terms of a system that includes multiple devices, components, modules, and the like. It should be understood and appreciated that each system may include additional devices, components, modules, and the like, and/or may not include all devices, components, modules, and the like discussed with reference to the accompanying drawings. In addition, combinations of these solutions may be used.

For ease of understanding, a communication system to which the embodiments of this application can be applied is first described.

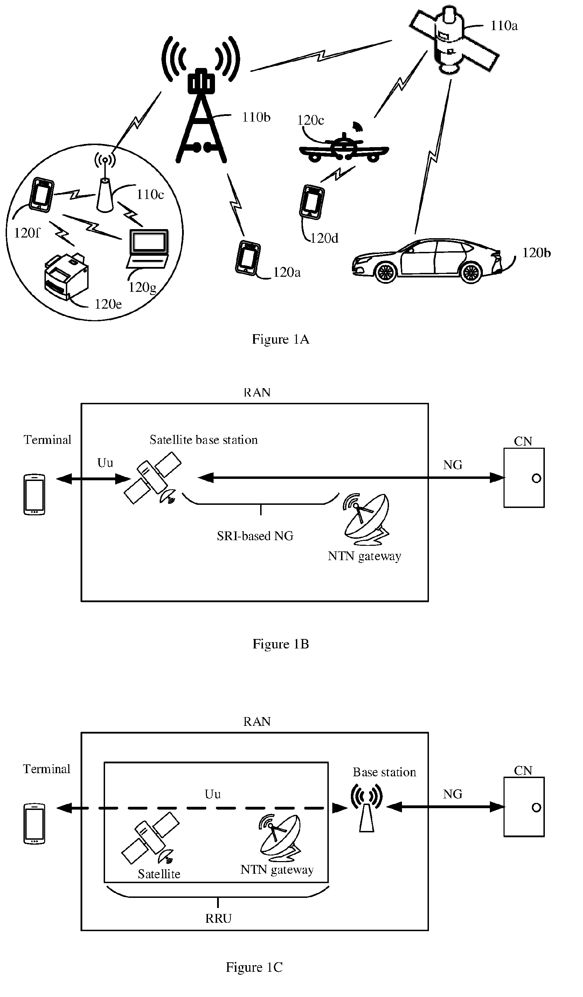

FIG. 1A is a schematic diagram of a communication system to which an embodiment of this application can be applied. As shown in FIG. 1A, the communication system may include at least one access network device (for example, 110a, 110b, and 110c in FIG. 1A), and may further include at least one terminal (for example, 120a to 120g in FIG. 1A). The terminal may be mobile or fixed. Each access network device may provide communication coverage for a specific geographical area, and may communicate with a terminal located in the coverage area. The access network devices may be connected to each other, the access network device may be connected to the terminal, and the terminal may be connected to the terminal through wired or wireless connections. FIG. 1A is merely a schematic diagram, and the communication system may further include other devices, for example, may further include a wireless relay device and a wireless backhaul device.

The embodiments of this application are applicable to a communication system in which a terrestrial communication system is integrated with a satellite communication system, and this communication system may also be referred to as an NTN communication system.

The ground communication system may be, for example, an LTE system, a universal mobile telecommunications system (universal mobile telecommunications system, UMTS), a 5G communication system, or a future communication system (for example, a 6G communication system), which is not limited herein.

Compared with a conventional communication system, a satellite communication system has a wider coverage area and can overcome natural geographical obstacles such as oceans, deserts, and mountains. In order to overcome the disadvantages of the conventional communication system, the satellite communication system may serve as an effective supplement to the conventional communication system. Satellite communication systems may be classified into the following three types based on different orbital altitudes: a high orbit (geostationary earth orbit, GEO) satellite communication system, a medium orbit (medium earth orbit, MEO) satellite communication system, and a low orbit (low earth orbit, LEO) satellite communication system. The GEO satellite communication system may also be referred to as a synchronous orbit satellite system. It is generally considered that, compared with terrestrial communication, NTN has different channel characteristics (for example, a large transmission delay and a large Doppler frequency offset). For example, a round-trip delay of the GEO satellite communication system is 238 to 270 milliseconds (ms), and a round-trip delay of the LEO satellite communication system is 8 ms to 20 ms.

The operational modes of a satellite can be divided into transparent mode and regenerative mode. When a satellite operates in transparent mode, it has the function of relay and forwarding. A gateway station possesses some or all of the functions of a base station, and in this case, the gateway station can be considered as a base station. When a satellite operates in regenerative mode, it has data processing capabilities and some or all of the functions of a base station, and in this case, the satellite can be considered as a base station.

Figure 1B is a schematic diagram of an NTN in regenerative mode. As shown in Figure 1B, the satellite has some or all of the functions of a base station and can be referred to as a satellite base station. The satellite base station can provide wireless access services and schedule radio resources for terminals accessing the network through this satellite base station. Communication between the satellite base station and the terminal can be conducted through the user-universal terrestrial radio access network (universal terrestrial radio access network-user, Uu) interface. Among these, the satellite base station and the core network (core network, CN) can communicate through the next generation (next generation, NG) interface, where the satellite base station and the core network can exchange non-access stratum (NAS) signaling and user service data through the NG interface. The satellite radio interface (SRI) interface serves as the feeder link between the NTN gateway and the satellite. In Figure 1B, the SRI interface can be implemented as part of the next generation (next generation, NG) interface to enable communication interaction between the satellite base station and the core network.

FIG. 1C is a schematic diagram of an NTN in a transparent transmission mode. As shown in FIG. 1C, a terminal communicates with a terrestrial base station through a Uu interface, and the satellite can achieve transparent payload transmission between the terminal and the terrestrial base station. The satellite and the NTN gateway can be considered as a remote radio unit (RRU) of the terrestrial base station, which implements transparent forwarding of signals, meaning that the satellite supports functions such as radio frequency filtering, frequency conversion, and amplification, while the signal waveform remains unchanged. The signal forwarding by the satellite is transparent to the terminal. The terrestrial base station and the CN can communicate with each other through an NG interface, exchanging NAS signaling of the core network and service data of the terminal through the NG interface.

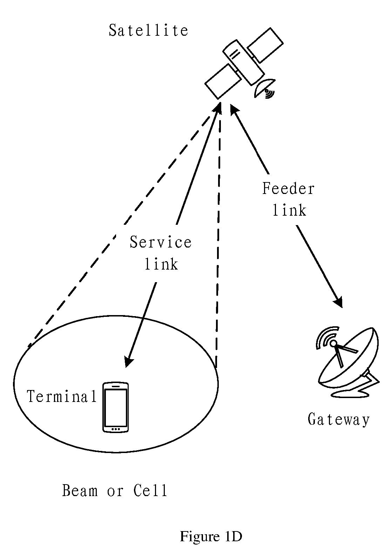

FIG. 1D is a schematic diagram of a satellite communication scenario. As shown in FIG. 1D, in the satellite communication scenario, an access network device includes a satellite and a gateway station (gateway). A terminal includes an Internet of Things terminal, a mobile phone terminal, a high-altitude aircraft, and the like. Alternatively, the terminal may be a terminal in another form and having another performance. This is not limited herein. A link between the satellite and the terminal is referred to as a service link (service link), and a link between the satellite and the gateway station is referred to as a feeder link (feeder link). The gateway station may also be referred to as a gateway station. It should be noted that the embodiments of this application may also be applied to a satellite communication scenario obtained by extending FIG. 1D.

In this application, a terminal (terminal) may also be referred to as user equipment (user equipment, UE), an access terminal, a subscriber unit (subscriber unit), a subscriber station, a mobile station, or a mobile station (mobile station). MS), a remote station, a remote terminal, a mobile device, a user terminal, a terminal device, a wireless communication device, a user agent, or a user device.

The terminal may be a device that provides a wireless communication function, for example, a handheld device or an in-vehicle device that has a wireless connection function. Currently, examples of some terminals are: a mobile phone (mobile phone), a satellite mobile terminal, a cellular phone (cellular phone), a smart phone (smart phone), a tablet computer, a notebook computer, a palmtop computer, a mobile Internet device (mobile internet device, MID), and a wearable device (e.g., smart watch, smart band, pedometer, smart glasses, etc.), vehicle-mounted devices (e.g. car, bicycle, electric car, airplane, ship, train, high-speed rail, etc.), a satellite terminal, a virtual reality (virtual reality, VR) device, an augmented reality (AR) device, a smart point of sale (Point of sale, POS) machine, a customer-premises equipment, CPE), a wireless terminal in industrial control, a wireless terminal in self driving, a wireless terminal in remote medical surgery, a wireless terminal in smart grid, and transportation safety Wireless terminals in, wireless terminals in smart city, and wireless terminals in smart home (e.g., refrigerator, TV, air conditioner, meter, etc.), an intelligent robot, a robotic arm, a cellular phone, a cordless phone, a session initiation protocol (SIP) phone, a wireless local loop (WLL) station, a personal digital assistant, PDAs), handheld devices with wireless communication capabilities, computing devices or other processing devices connected to wireless modems, flying devices (e.g., intelligent robots, hot air balloons, drones, aircraft) a terminal in a 5G network, a terminal in a future evolved public land mobile network (public land mobile network, PLMN), or the like. This is not limited in this embodiment of this application. As an example instead of a limitation, in this embodiment of this application, the terminal may alternatively be a mobile terminal (mobile termination, MT) in an integrated access and backhaul (integrated access and backhaul, IAB) node. When the IAB node faces its parent node, it may be regarded as a terminal, and in this case, the IAB node plays the role of the MT.

The embodiment of this application does not limit the device form of the terminal. The apparatus configured to implement the functions of the terminal may be the terminal itself, or may be an apparatus capable of supporting the terminal to implement the function, for example, a chip system. The apparatus may be installed in the terminal or used in conjunction with the terminal. In the embodiments of this application, the chip system may be composed of a chip, or may include a chip and other discrete components.

In this application, an access network device is a device that provides a wireless communication function for a terminal, and the terminal may communicate with a core network device through the access network device. As a node in a radio access network, the access network device may also be referred to as a base station, a radio access network (radio access network, RAN) node (or device), or an access point (access point, AP). A communications system may include a plurality of access network devices, and these multiple access network devices may be nodes of the same type or nodes of different types. In some scenarios, the roles of the access network device and the terminal are relative to each other. For example, network element #A may be a helicopter or an unmanned aerial vehicle (UAV), which may be configured as a mobile base station and access a RAN through network element #B. For terminals that access the RAN through network element #A, network element #A functions as a base station; however, for network element #B, network element #A functions as a terminal.

In a possible scenario, the access network device may be a base station (base station), a transmitting and receiving point (transmitting and receiving point, TRP), a transmit point (transmitting point, TP), a next generation base station in a 6G mobile communications system, a base station in a future mobile communications system, a satellite, an IAB node, a mobile switching center, an aerostat, or a satellite. The access network device may be a macro base station, a micro base station, an indoor unit, a relay node, a donor node, or a radio controller in a cloud RAN (cloud RAN, CRAN) scenario. The access network device may also be a device that functions as a base station in sidelink (sidelink) communication, vehicle-to-everything (V2X) communication, unmanned aerial vehicle (UAV) communication, or machine-type communication. Optionally, the access network device may also be a server, a wearable device, a vehicle, an in-vehicle device, or the like. For example, the access network device in the V2X technology may be a road side unit (road side unit, RSU).

In another possible scenario, multiple access network devices collaboratively assist a terminal in achieving wireless access, where different access network devices respectively implement some functions of a base station. For example, the access network device may be a central unit (CU), a distributed unit (DU), a CU-control plane (control plane, CP), a CU-user plane (user plane, UP), a radio unit (RU), or the like. The CU and the DU may be separately disposed, or may be included in the same network element, for example, in a baseband unit (BBU). The RU may be included in a radio frequency device or a radio frequency unit, for example, in a remote radio unit (RRU), an active antenna unit (AAU), or a remote radio head (RRH). It may be understood that the access network device may be a CU node, a DU node, or a device that includes both a CU node and a DU node. In addition, the CU may be divided into an access network device in the radio access network (RAN), or the CU may be divided into an access network device in the core network (CN), which is not limited herein.

In different systems, the CU (or the CU-CP and the CU-UP), the DU, or the RU may also have different names, but a person skilled in the art can understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, this application uses the CU, the CU-CP, the CU-UP, the DU, and the RU as examples for description. Any one of the units of the CU (or the CU-CP, the CU-UP), the DU, and the RU in this application may be implemented by using a software module, a hardware module, or a combination of a software module and a hardware module.

In the embodiments of this application, a form of the access network device is not limited. An apparatus configured to implement a function of the access network device may be an access network device, or may be an apparatus that can support the access network device in implementing the function, for example, a chip system. The apparatus may be installed in the access network device or used in a matching manner with the access network device.

The access network device and the terminal may be fixed or may be movable. The access network device and the terminal may be deployed on land, including indoor or outdoor, handheld, or vehicle-mounted; may be deployed on a water surface; or may be deployed on an airplane, a balloon, or a satellite in the air. Application scenarios of the access network device and the terminal are not limited in embodiments of this application.

The communications system and the service scenario described in embodiments of this application are intended to describe the technical solutions in embodiments of this application more clearly, and do not constitute a limitation on the technical solutions provided in embodiments of this application. A person of ordinary skill in the art may know that, with evolution of network architectures and emergence of new service scenarios, the technical solutions provided in embodiments of this application are also applicable to similar technical problems.

The following first provides explanations and descriptions of related terms used in embodiments of this application. It should be noted that these explanations are intended to make embodiments of this application easier to understand, and should not be construed as a limitation on the protection scope claimed in this application.

### 1) Mobility management:

Due to the movement of the terminal, the terminal may perform selection and handover between different cells for access, and the selection and handover generally depend on mobility management. Mobility management mainly refers to measurement procedures related to radio resource management (RRM), and mobility signaling procedures triggered based on measurement results.

In mobility management, the access network device delivers measurement configuration information to the terminal, and the terminal may measure a reference signal based on the measurement configuration information, thereby obtaining a measurement result. The measurement result may include at least one of the following: a reference signal received power (reference signal receiving power, RSRP), a reference signal received quality (reference signal receiving quality, RSRQ), or a signal to interference plus noise ratio (signal to interference plus noise ratio, SINR).

There may be two types of reference signals used for mobility management, for example, an SSB or a channel state information reference signal (channel state information - reference signal, CSI-RS). In the embodiments of this application, research is mainly conducted on SSB-based mobility management.

### 2) SSB:

A synchronization signal block (synchronization signal block, SS) is generally sent together with a master information block (main information block, MIB) on a PBCH, to form an SS/PBCH block. The SSB described in the following of the embodiments of this application may be an SS/PBCH block (SS/PBCH block). The synchronization signal may be used by the terminal to perform downlink synchronization and obtain an identifier (identity, ID) of a cell, where the downlink synchronization may include frequency synchronization and time synchronization. The PBCH may be used by the terminal to obtain information about an accessed cell.

### 3) Relationship between SSB and beam:

An access network device may use multiple antennas to enhance coverage, but using multiple antennas results in antenna radiation of very narrow beams, where a single narrow beam may not cover the entire cell. At the same time, due to hardware limitations, the access network device often cannot simultaneously send signals through multiple beams to cover the entire cell. Therefore, a beam sweeping technology is introduced in the communication system, where the access network device can send signals through different beams at different times. For example, for a cell, the access network device may send different SSBs through different beams at different times, thereby achieving broadcast beam coverage for the cell. Each beam may be indicated through an SSB, for instance, each beam may be indicated by an index of the SSB transmitted on that beam.

### 4) SSB-based measurement timing configuration (SSB-based measurement timing configuration, SMTC):

In most cases, the SSB is not continuous in the time domain. The terminal does not need to continuously search for and measure the SSB in the time domain. Instead, it only needs to operate within the time window where it can lock onto these SSBs. Therefore, the NR protocol introduces SMTC (SSB-based measurement timing configuration), which can be used to configure a measurement time window. The access network device can configure the corresponding SMTC for each frequency to be measured, and then the terminal can perform SSB measurements within the measurement time window configured by the SMTC for that frequency. If the center frequencies of the SSBs of two cells are the same and the subcarrier spacings are also identical during RRM measurements, the measurement between these two cells is referred to as intra-frequency measurement; otherwise, it is called inter-frequency measurement. In the case of intra-frequency measurement scenarios, the terminal may measure the SSBs of multiple cells within the measurement time window configured by the SMTC for a frequency.

### 5) The correspondence between multiple areas within the coverage of an access network device (e.g., a satellite) and multiple SSBs.

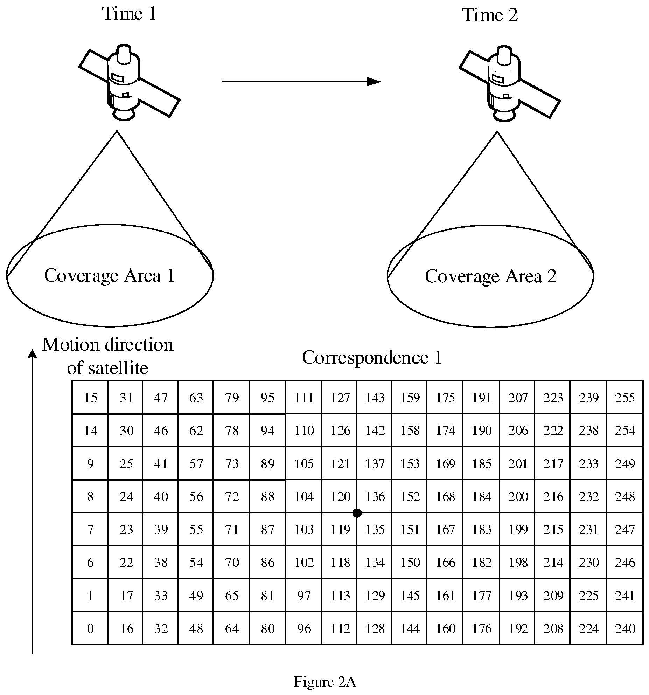

In some possible implementations, the correspondence between multiple areas within the coverage of the access network device and multiple SSBs may remain unchanged. That is, at different times, the correspondence between the multiple areas within the coverage of the access network device and the multiple SSBs is the same. For example, as shown in FIG. 2A, at time 1, the satellite is at location 1, and the coverage of the satellite is coverage area 1. The correspondence between multiple areas and multiple SSBs within coverage area 1 is correspondence 1. At time 2, the satellite moves to location 2, and the coverage of the satellite is coverage area 2. The correspondence between multiple areas and multiple SSBs within coverage area 2 is still correspondence 1. In this implementation, as the access network device moves, the beam weight and beam direction on the access network device side remain unchanged. Therefore, this implementation may also be referred to as a "beam following the access network device" implementation.

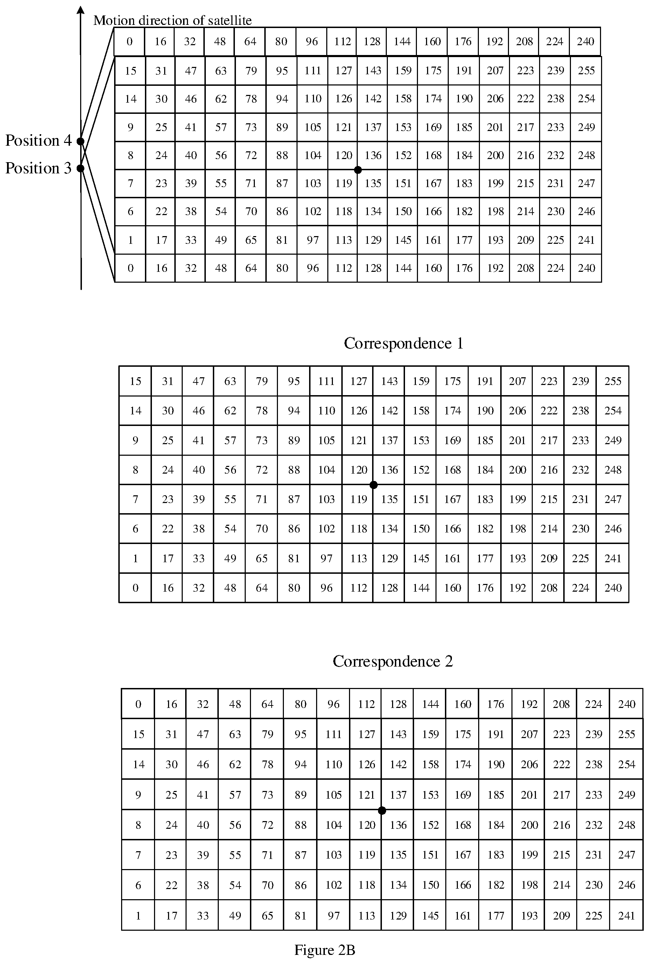

In other possible implementations, the correspondence between multiple areas within the coverage of the access network device and multiple SSBs may change. That is, at different times, the correspondence between the multiple areas within the coverage of the access network device and the multiple SSBs may be different. Optionally, within a certain period of time, even if the location of the access network device changes, the SSBs corresponding to the same area on the ground within the coverage of the access network device remain the same. For example, as shown in FIG. 2B, at time 3, the satellite is at location 3, and the coverage of the satellite is coverage area 3. The correspondence between multiple areas and multiple SSBs within coverage area 3 is correspondence 1. At time 4, the satellite is at location 4, and the coverage of the satellite is coverage area 4. The correspondence between multiple areas and multiple SSBs within coverage area 4 is correspondence 2. Correspondence 1 and correspondence 2 are different. In both correspondence 1 and correspondence 2, ground area 1 corresponds to SSB1. In this implementation, as the access network device moves, the SSBs corresponding to the same area on the ground remain the same. Therefore, this implementation may also be referred to as a "ground fixed area" implementation.

### 6) Region:

In this application, a region may be a geographical area or range, an administrative area or range, a beam position, or the like. The beam position may be a coverage area of a beam (or a projection area of the beam on the ground). The access network device may adjust the weight of the antenna, so that the beam sent by the access network device may point to different directions and have different coverage areas. For example, a satellite is configured with 16 beams, where each beam has a different coverage area, and the coverage area of each beam may be a beam position.

### 7) Initial access:

In this application, initial access may include cell search and random access**.**

Before accessing a network, a terminal needs to perform cell search. For example, when the terminal is powered off and then powered on again, the terminal may perform cell search. The purpose of cell search is to enable the terminal to obtain time synchronization and frequency synchronization of the system, so that the terminal can read system information (for example, information about a cell to be accessed, system bandwidth, and broadcast information of other cells), and perform subsequent data transmission.

Random access is a process initiated by a terminal after the terminal and the access network device achieve downlink synchronization, where the terminal and the access network device achieve uplink synchronization. Random access may be classified into contention-based random access (which may also be referred to as four-step random access) and contention-free random access (which may also be referred to as two-step random access).

8) In this application, "sending information to (a terminal)" may be understood as that a destination end of the information is the terminal, and may include directly or indirectly sending the information to the terminal. "Receiving information from (a terminal)" may be understood as that a source end of the information is the terminal, and may include directly or indirectly receiving the information from the terminal. The information may undergo necessary processing, such as format changes, between the source end from which the information is sent and the destination end, but the destination end may understand the information as valid information from the source end. Similar expressions in this application may be understood in a similar manner, and no further details will be provided herein.

In communication systems such as NTNs, each beam of an access network device may correspond to an area (for example, a wave position). How to determine the correspondence between an area and an SSB in communication systems such as NTNs needs to be further studied. This application imposes no limitation on the quantity of beams of the access network device. In some examples, the quantity of beams of the access network device may be 8 or 64. In other examples, the quantity of beams of the access network device may reach hundreds or even thousands, and the quantity of areas (for example, wave positions) corresponding to the beams may also reach hundreds or even thousands. For example, in an NTN communication system, to overcome the impact of path loss caused by a transmission distance and ensure a communication service quality, a satellite generally uses a large-scale antenna array to provide a relatively high array gain, but this also makes the main lobe of the beam narrower. For example, the coverage radius of a beam with a 3 decibel (dB) beamwidth is only about 10 kilometers. If the service area of the satellite is several hundred thousand square kilometers, then thousands of beams are required to achieve seamless coverage of the satellite's service area using narrow beams. Furthermore, even if the beam is widened to some extent, hundreds of beams are still required to achieve coverage while ensuring the gain level.

In addition, in an NTN communication system, due to the high speed of satellite movement, terminals may frequently switch between multiple satellites, making mobility management particularly important. However, an excessive number of satellite beams can significantly increase the time required for terminals to search for and measure SSBs in mobility management. Furthermore, because the distances from the serving satellite and adjacent satellites to the terminal vary, the delays in SSB transmission to the terminal also differ. To ensure that the SSB measurements of both the serving satellite and adjacent satellites can be included within the SMTC (SSB-based measurement timing configuration), a longer measurement window needs to be configured. However, an excessively long SMTC window will significantly reduce the measurement efficiency of the terminal. On one hand, the power consumption of the terminal for continuously searching for SSBs will increase noticeably, and on the other hand, the time-frequency resource overhead for SSB measurements will also increase, which greatly limits the terminal's data transmission capabilities. Therefore, for communication systems such as NTN, how to reduce the time required for terminals to measure SSBs and lower the terminal' s power consumption is an issue that requires further research.

It should be understood that this application is not limited to an NTN scenario, and the NTN scenario is merely one of application scenarios. The method is still applicable to other scenarios (for example, future 6G evolution).

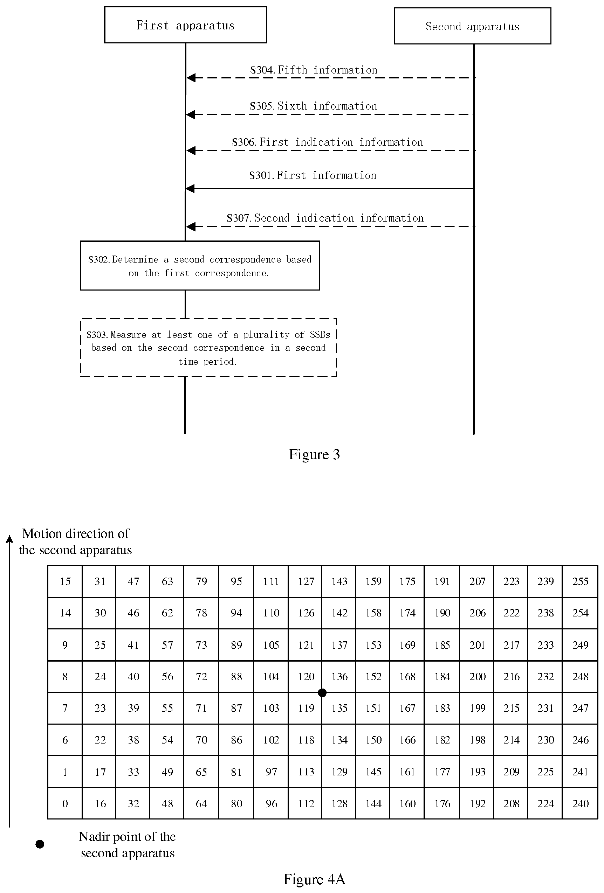

Embodiments of this application provide a communication method. FIG. 3 is a schematic flowchart corresponding to the communication method according to an embodiment of this application. In FIG. 3, an example in which the first apparatus and the second apparatus are used as execution entities of the interaction indication is used to illustrate the method, but the execution entity of the interaction indication is not limited in this application. For example, the first apparatus may be a terminal, or may be a module (for example, a circuit, a chip, a chip system, or a processor) applied to a terminal, or may be a logical node, a logical module, or software that can implement all or some functions of the terminal; or the second apparatus may be an access network device (for example, a satellite), or may be a module (for example, a circuit, a chip, a chip system, or a processor) applied to an access network device (for example, a satellite), or may be a logical node, a logical module, or software that can implement all or some functions of the access network device (for example, a satellite). As shown in FIG. 3, the method includes the following steps:
**S301**: The second apparatus sends first information to the first apparatus; correspondingly, the first apparatus receives the first information from the second apparatus.

The first information may be used to determine a first correspondence. The first correspondence is a correspondence between a plurality of first areas and a plurality of SSBs in a first time period, where the plurality of first areas are a plurality of areas within the coverage area of the second apparatus in the first time period. The indexes of the plurality of SSBs may be consecutive or non-consecutive. Optionally, the first correspondence may be represented by a pattern or a matrix. For example, the first correspondence includes M rows and N columns, where M is a quantity of areas within the coverage area of the second apparatus along the first direction, N is a quantity of areas within the coverage area of the second apparatus along the second direction, and M and N are positive integers. The first direction may be a movement direction (or an orbital direction) of the second apparatus; the second direction is different from the first direction, for example, the second direction is perpendicular to the first direction. The first element is any element in the first correspondence, where the first element represents the first area a in the plurality of first areas, a value of the first element is an index of the first SSB in the plurality of SSBs, and the first area a corresponds to the first SSB. For example, FIG. 4A shows a possible example of the first correspondence. The first correspondence includes 8 rows and 16 columns; that is, in the first time period, the coverage area of the second apparatus includes 8*16=128 first areas, and each first area corresponds to one SSB. The first area 0 corresponds to SSB0, the first area 1 corresponds to SSB1, and so on.

Optionally, the first information may be carried in broadcast information sent by the second apparatus, where the broadcast information is, for example, system information or UE-specific radio resource control (radio resource control, RRC) signaling. The system information may be a conventional system information block, for example, a system information block 1 (system information block 1, SIB1), a system information block 19 (system information block 19, SIB19), or other system information (other system information, OSI); or the system information may be a new system information block, for example, a system information block 1bis (system information block 1 bis, SIB1bis). It should be understood that the SIB1bis may also have another name, for example, system information block 1' (system information block 1', SIB1').

To determine the first correspondence, the first information may be used to indicate at least one of the following information 1 to information 7:
Information 1: a quantity of first areas in the coverage areas of the plurality of first areas along a third direction. The coverage areas of the plurality of first areas may be the same as the coverage area of the second apparatus. Therefore, the information 1 may be replaced with a quantity of first areas in the coverage area of the second apparatus along the third direction. The third direction may be the same as or different from the first direction. When the third direction is the same as the first direction, the information 1 may be M. Still using FIG. 4A as an example, the coverage area of the second apparatus includes 128 first areas in the first time period. If the third direction is the same as the first direction, that is, the movement direction of the second apparatus, the information 1 may be 8.
Information 2: a radius, a diameter, or a side length of each of the plurality of first areas along the third direction. For example, if the shape of each of the plurality of first areas is a circle or an ellipse, the information 2 may be a radius or a diameter of each of the plurality of first areas along the third direction. For another example, if the shape of each of the plurality of first areas is a rectangle or a square, the information 2 may be a side length of each of the plurality of first areas along the third direction.

Optionally, the shapes and sizes of the plurality of first areas may be the same or different. If the shapes and sizes of the plurality of first areas are the same, the first information may indicate only a radius, a diameter, or a side length of one of the plurality of first areas in the third direction, thereby reducing signaling overheads of the first information. For example, the first information may indicate that a radius of each of the plurality of first areas in the third direction is 40 kilometers (km). If the shapes and sizes of the plurality of first areas are different, the first information may indicate a radius, a diameter, or a side length of each of the plurality of first areas in the third direction.

Information 3: a quantity of first areas in the coverage areas of the plurality of first areas along the fourth direction. The coverage areas of the plurality of first areas may be the same as the coverage area of the second apparatus. Therefore, the information 3 may be replaced with a quantity of first areas in the coverage area of the second apparatus along the fourth direction. The fourth direction may be different from the third direction. For example, the third direction and the fourth direction are perpendicular to each other. The fourth direction may be the same as or different from the second direction. When the fourth direction is the same as the second direction, the information 3 may be N. Still using FIG. 4A as an example, the coverage area of the second apparatus includes 128 first areas in the first time period. If the third direction is the movement direction of the second apparatus and the third direction is perpendicular to the fourth direction, then the information 3 is 16.

Information 4: radius, diameter, or side length of each of the plurality of first areas in the fourth direction. For example, if each of the plurality of first areas is in a circular or elliptical shape, the information 4 may be a radius or a diameter of each of the plurality of first areas in the fourth direction. For another example, if each of the plurality of first areas is in a rectangular or square shape, the information 4 may be a side length of each of the plurality of first areas in the fourth direction.

Optionally, the shapes and sizes of the plurality of first areas may be the same or different. If the shapes and sizes of the plurality of first areas are the same, the first information may indicate only a radius, a diameter, or a side length of one of the plurality of first areas in the fourth direction, thereby reducing signaling overheads of the first information. For example, the first information may indicate that a radius of each of the plurality of first areas in the fourth direction is 30 km. If the shapes and sizes of the plurality of first areas are different, the first information may indicate a radius, a diameter, or a side length of each of the plurality of first areas in the fourth direction.

Optionally, if each of the plurality of first regions has a shape of a circle or a square, the first information may indicate one of the information 1 and the information 3, and indicate one of the information 2 and the information 4.

Information 5: a location of a reference region in the plurality of first regions. The reference region may be one of the plurality of first regions. In some examples, the reference region is a central region in the plurality of first regions. In other examples, the reference region is a start region in the plurality of first regions. For example, still using FIG. 4A as an example, the reference region may be an area corresponding to 0. In still other examples, the reference region is an area in the plurality of first regions that corresponds to a start SSB. The start SSB may be an SSB with the largest or the smallest index in the plurality of SSBs. For example, still using FIG. 4A as an example, if the start SSB may be an SSB with the smallest index in the plurality of SSBs, the reference region may be an area corresponding to an SSB index 0; or if the start SSB may be an SSB with the largest index in the plurality of SSBs, the reference region may be an area corresponding to an SSB index 255.

In some implementations, the first information may indicate the geographical location (for example, coordinates or longitude and latitude) of the reference area, so that after receiving the first information, the first apparatus may determine the location of the reference area. In other implementations, the first information may indicate a relationship between the reference area and a reference location (for example, the nadir point of the second apparatus), so that the first apparatus may determine the geographical location of the reference area based on the first information and the reference location. For example, still using FIG. 4A as an example, the reference area may be an area corresponding to 0, the reference location is the nadir point of the second apparatus, and the first information indicates that: the reference location is offset by four first areas in the opposite direction of the third direction relative to the nadir point of the second apparatus, and is offset by eight first areas in the opposite direction of the fourth direction.

Information 6: In an initial correspondence between a plurality of areas within the coverage of the second apparatus and a plurality of SSBs, an arrangement order of the plurality of SSBs. In some examples, the arrangement order is sequentially arranged along the fourth direction. For example, the fourth direction is perpendicular to the movement direction of the second apparatus (or the fourth direction is perpendicular to the orbital direction of the second apparatus), and the arrangement order is sequentially arranged along the perpendicular to the orbital direction. In other examples, the arrangement order is sequentially arranged along the third direction. For example, the third direction is the movement direction of the second apparatus (or the orbital direction of the second apparatus), and the arrangement order is sequentially arranged along the horizontal orbital direction. Assuming that the initial correspondence is as shown in FIG. 4A, if the third direction is the movement direction of the second apparatus, then the indexes of the plurality of SSBs gradually increase along the third direction.

Optionally, if the indexes of the plurality of SSBs are not consecutive, information 6 may further include the indexes of the plurality of SSBs. The indexes of the plurality of SSBs may be presented in a bitmap form. For example, still using FIG. 4A as an example, the indexes of the plurality of SSBs included in the information 6 may be {0, 1, 6, 7, 8, 9, 14, 15,..., 240, 241, 246, 247, 248, 249, 254, 255}.

An association relationship between information 7, the first correspondence, and the initial correspondence: For example, there are M types of correspondence between a plurality of areas within the coverage of the second apparatus and a plurality of SSBs. The M types of correspondence include the initial correspondence and the first correspondence. Any one of the M types of correspondence has an association relationship with the initial correspondence. The following uses an example of an association relationship between the i-th correspondence of the M types of correspondence and the initial correspondence for description. The i-th correspondence includes M rows and N columns, where i is an integer that takes all values from 1 to M. The second element is any element in the i-th correspondence, where the second element represents an area b in the plurality of areas within the coverage of the second apparatus, a value of the second element is an index of the second SSB in the plurality of SSBs, and the area b corresponds to the second SSB. The last (or bottom) i-1 rows in the initial correspondence are the first (or top) i-1 rows in the i-th correspondence; and the first (or top) M-i+1 rows in the initial correspondence are the last (or bottom) M-i+1 rows in the i-th correspondence.

If the first correspondence is the ith correspondence, information 7 may be related to i. For example, the information 7 is i, or the information 7 is a sum of i and an offset value 1, where the offset value 1 may be a positive number or a negative number. The offset value 1 may be preset, for example, as stipulated in a protocol; or may be determined by the first apparatus or the second apparatus. The following uses an example in which the information 7 is i and M is 8 for description.

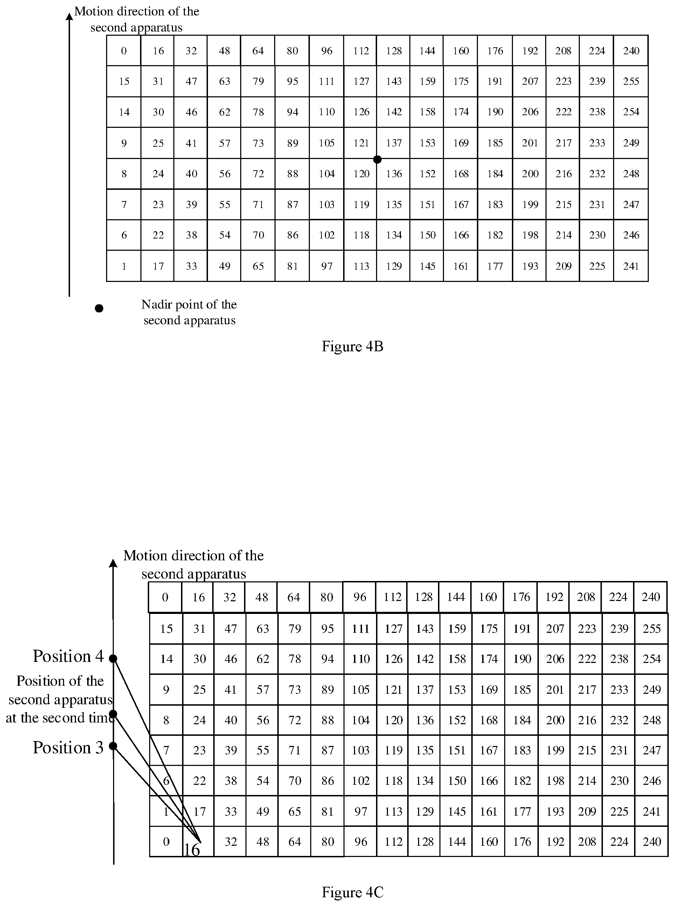

For example, the initial correspondence is the correspondence shown in FIG. 4A, the first correspondence is the correspondence shown in FIG. 4B, and i is 2. The last (or the bottommost) 1 row (i.e., i-1=2-1) in the initial correspondence is the first (or the topmost) 1 row in the first correspondence; and the first (or the topmost) 7 rows (i.e., M-i+1=8-2+1=7) in the initial correspondence are the last (or the bottommost) 7 rows in the first correspondence.

For another example, both the initial correspondence and the first correspondence are the correspondence shown in FIG. 4A, and i is 1. The first row in the initial correspondence is the first row in the first correspondence; the second row in the initial correspondence is the second row in the first correspondence, and so on.

In this way, the first apparatus may determine the first correspondence based on the first information. For example, the first apparatus may determine the plurality of first areas based on information 1 to information 5, and determine the first correspondence between the plurality of first areas and the plurality of SSBs based on information 6 and information 7. Optionally, when determining the first correspondence, the first apparatus may further refer to the ephemeris of the second apparatus; that is, the first apparatus may determine the first correspondence based on the ephemeris of the second apparatus and the first information. For example, the first apparatus may determine information 5 based on the ephemeris of the second satellite and the first information, thereby determining the locations of the plurality of first areas, and then determining the first correspondence.

**S302**: The first apparatus determines a second correspondence based on the first correspondence.

The second correspondence is a correspondence between a plurality of second areas and a plurality of SSBs within a second time period. The second time period may be after the first time period, and the first time period and the second time period may be consecutive or non-consecutive. The plurality of second areas may be a plurality of areas covered by the second apparatus within the second time period. For specific content of the second correspondence, refer to the description of the first correspondence in S301, where the first correspondence is simply replaced with the second correspondence, the first area is replaced with the second area, and the first time period is replaced with the second time period. Repeated parts will not be described again.

The first correspondence and the second correspondence may be the same. For example, the first correspondence and the second correspondence are the same one of the M correspondences in S301, that is, i corresponding to the first correspondence is the same as i corresponding to the second correspondence. Alternatively, the first correspondence and the second correspondence may be different. For example, the first correspondence and the second correspondence are different correspondences in the M correspondences in S301, that is, i corresponding to the first correspondence is different from i corresponding to the second correspondence.

S302 may be implemented in a plurality of manners, for example, manner a1 or manner a2:
**Manner a1**: The first apparatus determines the second correspondence based on the start time of the first time period, the duration of the first time period, and the first correspondence. In other words, the start time of the first time period, the duration of the first time period, and the first correspondence may be used to determine the second correspondence.

The following first describes a manner in which the first apparatus determines the start time of the first time period.

In some possible implementations, the first apparatus may determine the time at which the first information is received as the start time of the first time period. For example, if the first apparatus receives the first information at the 0th second, the first apparatus may determine the start time of the first time period as the 0th second. In this manner, the second apparatus does not need to indicate the start time of the first time period to the first apparatus, thereby reducing signaling overheads.

In other possible implementations, the second apparatus may indicate the start time of the first time period to the first apparatus. For example, the second apparatus may send fourth information to the first apparatus; correspondingly, the first apparatus receives the fourth information from the second apparatus. The fourth information may be used to indicate the start time of the first time period. The fourth information may explicitly indicate the start time of the first time period. For example, the fourth information includes "0" (in seconds), indicating that the start time of the first time period is the 0th second. Alternatively, the fourth information may implicitly indicate the start time of the first time period, for example, the fourth information is information that has a correspondence with the start time of the first time period. The fourth information and the first information may be carried in a same message, or may be carried in different messages. This is not limited in this application. In this manner, the second apparatus may indicate the start time of the first time period to the first apparatus, so that the first time period determined by the first apparatus and the second apparatus is the same, thereby avoiding an inconsistency in understanding of an effective time of the first correspondence between the first apparatus and the second apparatus.

In this application, the duration of the first time period may also be referred to as at least one of the following: valid duration of the first correspondence, or a duration during which a beam corresponding to each SSB in the first correspondence serves an area corresponding to the SSB. As described in S301, there are M types of correspondence between the plurality of areas in the coverage area of the second apparatus and the plurality of SSBs, and valid durations of each of the M types of correspondence may be the same. In this case, the duration of the first time period may also be referred to as valid durations of each of the correspondence between the plurality of areas in the coverage area of the second apparatus and the plurality of SSBs.

The following describes a manner in which the first apparatus determines the duration of the first time period. There are a plurality of manners in which the first apparatus determines the duration of the first time period, for example, manner b1 or manner b2.

**Manner b1**: The second apparatus sends second information to the first apparatus. Correspondingly, the first apparatus receives the second information from the second apparatus. The second information may be used to indicate the duration of the first time period. The second information may explicitly indicate the duration of the first time period. For example, the second information includes 9, and a unit is second, indicating that the duration of the first time period is 9 seconds. Alternatively, the second information may implicitly indicate the duration of the first time period. For example, the second information is information that has a correspondence with the duration of the first time period. The second information and the first information may be carried in a same message, or may be carried in different messages. This is not limited in this application. By using manner b1, the second apparatus can accurately indicate the duration of the first time period to the first apparatus.

**Manner b2**: The first apparatus sends third information to the second apparatus; correspondingly, the second apparatus receives the third information from the first apparatus. The third information may be used to indicate a radius, a diameter, or a side length of an area in which the first apparatus is located in the plurality of first areas. For example, the third information may include the information 2 and/or the information 4 in S301. The radius, the diameter, or the side length of the area in which the first apparatus is located may be used to determine the duration of the first time period; in other words, the first apparatus may determine the duration of the first time period based on the radius, the diameter, or the side length of the area in which the first apparatus is located.

Optionally, the motion information of the second apparatus, and the radius, the diameter, or the side length of the area in which the first apparatus is located, may be used to determine the duration of the first time period; in other words, the first apparatus may determine the duration of the first time period based on the motion information of the second apparatus, and the radius, the diameter, or the side length of the area in which the first apparatus is located. The motion information of the second apparatus may include a motion speed and a motion direction of the second apparatus. For example, Δt=d1/v, where Δt is the duration of the first time period, v is the motion speed of the second apparatus, and d1 is the diameter or the side length of the area in which the first apparatus is located along the motion direction of the second apparatus.

In this manner b2, the first apparatus may determine the duration of the first time period by itself, and the second apparatus does not need to indicate the duration of the first time period to the first apparatus, thereby reducing signaling overheads.

The following describes a manner of determining the second correspondence in manner a1.

Optionally, the first correspondence includes M rows and N columns, and the second correspondence also includes M rows and N columns. For example, both the first correspondence and the second correspondence belong to the M types of correspondences in S301. The last (or the bottom) K rows in the first correspondence are the first (or the top) K rows in the second correspondence; and the first (or the top) M-K rows in the first correspondence are the last (or the bottom) M-K rows in the second correspondence. For example, if the first correspondence is the correspondence shown in FIG. 4A, M is 8, N is 16, and K is 1, then the second correspondence may be the correspondence shown in FIG. 4B. That is, the last (or the bottom) 1 (that is, K) rows in the first correspondence are the first (or the top) 1 row in the second correspondence; and the first (or the top) 7 (that is, M-K=8-1=7) rows in the first correspondence are the last (or the bottom) 7 rows in the second correspondence.

Herein, K is determined based on the number of areas that the second apparatus crosses from the first time period to the second time period; in other words, the first apparatus may determine K based on the number of areas that the second apparatus crosses from the first time period to the second time period. Since the number of areas may be determined based on the start time of the first time period, the duration of the first time period, and the first correspondence, K may be determined based on the start time of the first time period, the duration of the first time period, and the first correspondence. For example, K may satisfy one of the following formula (1) to formula (5), so that the first apparatus may determine K based on one of the formula (1) to formula (5).$K = floor \left(\left(t-t0\right)/Δt\right) mod M ,$ formula (1) $K = \left(floor\left(\left(t-t0\right)/Δt\right)+1\right) mod M ,$ formula (2) $K = roundup \left(\left(t-t0\right)/Δt\right) mod M ,$ formula (3) $K = \left(roundup\left(\left(t-t0\right)/Δt\right)-1\right) mod M ,$ formula (4) $K = round \left(\left(t-t0\right)/Δt\right) mod M ,$ formula (5) where t is a time point in the second time period, t0 is the start moment of the first time period, Δt is the duration of the first time period, floor represents a rounding down operation, roundup represents a rounding up operation, round represents a rounding operation, and mod represents a modulo operation.

The following uses an example where K satisfies formula (1) to illustrate the method for determining K. For example, if the first correspondence is the correspondence shown in FIG. 4A, M is 8, Δt is 9 seconds, t0 is 0 seconds, and t is 10 seconds, then K = floor((t - t0)/Δt) mod M = floor((10 - 0)/9) mod 8 = 1 mod 8 = 1. In this case, the second correspondence may be the correspondence shown in FIG. 4B.

By using method a1, the first apparatus can quickly and accurately determine the second correspondence based on the start time of the first time period, the duration of the first time period, and the first correspondence.

**Manner a2**: The first apparatus determines the second correspondence based on the first correspondence and the first indication information from the second apparatus.

Manner a2 may include steps A1 to A2:
**Step A1**: The second apparatus sends the first indication information to the first apparatus. Correspondingly, the first apparatus receives the first indication information from the second apparatus.

The first indication information may be used to indicate that a correspondence between a plurality of areas in the coverage area of the second apparatus and a plurality of SSBs changes. In some examples, the first indication information is information specifically used to indicate that the correspondence between the plurality of areas in the coverage area of the second apparatus and the plurality of SSBs changes. In this way, after receiving the first indication information, the first apparatus may determine that the correspondence between the plurality of areas in the coverage area of the second apparatus and the plurality of SSBs changes. In other examples, a value of the first indication information is a first value (for example, 0 or 1), indicating that the correspondence between the plurality of areas in the coverage area of the second apparatus and the plurality of SSBs changes.

The first indication information may be carried in a conventional message (for example, a paging (paging) message), or may be carried in a new message. This is not limited in this application.

**Step A2**: The first apparatus determines the second correspondence based on the first correspondence and the first indication information.

Optionally, the first correspondence includes M rows and N columns, and the second correspondence includes M rows and N columns. For example, both the first correspondence and the second correspondence belong to the M types of correspondences in S301. The last (or the bottommost) one row in the first correspondence is the first (or the topmost) one row in the second correspondence, and the first (or the topmost) M-1 rows in the first correspondence are the last (or the bottommost) M-1 rows in the second correspondence. The start time of the second time period may be a time at which the first indication information is received. For example, if the first correspondence is the correspondence shown in FIG. 4A, M is 8, and N is 16, the second correspondence may be the correspondence shown in FIG. 4B. In other words, the last (or the bottommost) one row in the first correspondence is the first (or the topmost) one row in the second correspondence, and the first (or the topmost) 7 (that is, M-1=8-1=7) rows in the first correspondence are the last (or the bottommost) 7 rows in the second correspondence.

By using method a2, the first apparatus can quickly and accurately determine the second correspondence based on the first correspondence and the first indication information from the second apparatus.

In some possible implementations, the method shown in FIG. 3 further includes S303.

**S303**: The first apparatus measures at least one of the plurality of SSBs in the second time period based on the second correspondence.

In some implementations, the first apparatus may measure one of the plurality of SSBs in the second time period based on the location of the first apparatus and the second correspondence. In some examples, the first apparatus may measure an SSB corresponding to an area in which the first apparatus is located in the second time period. For example, the second correspondence is the correspondence shown in FIG. 4B. If the first apparatus is located in an area corresponding to the SSB 136, the first apparatus may measure the SSB 136. In other examples, the first apparatus may measure, in the second time period, an SSB corresponding to an area in which the first apparatus is located and an SSB corresponding to an area adjacent to the area in which the first apparatus is located. For example, the second correspondence is the correspondence shown in FIG. 4B. If the first apparatus is located in an area corresponding to the SSB 136, the first apparatus may measure the SSB 136, SSB 119, SSB 120, SSB 121, SSB 135, SSB 137, SSB 151, SSB 152, and SSB 153.

In some other implementations, the first apparatus may measure one of the plurality of SSBs in the second time period based on the location of the first apparatus, the motion information of the first apparatus, and the second correspondence. In some examples, if the first apparatus does not move, the first apparatus may measure the SSB corresponding to the area where the first apparatus is located in the second time period. For example, the second correspondence is the correspondence shown in FIG. 4B. If the first apparatus is located in an area corresponding to the SSB 136, and the first apparatus does not move, the first apparatus may measure the SSB 136. In some other examples, if the first apparatus moves, the first apparatus may measure, in the second time period, an SSB corresponding to an area where the first apparatus is located and an SSB corresponding to a first adjacent area, where the first adjacent area is an area adjacent to the area where the first apparatus is located in a motion direction of the first apparatus. For example, the second correspondence is the correspondence shown in FIG. 4B. If the first apparatus is located in an area corresponding to the SSB 136, and the first apparatus moves in a direction towards an area corresponding to the SSB 137, the first apparatus may measure the SSB 136 and the SSB 137.

By using this method, the first apparatus may measure some of the plurality of SSBs based on the second correspondence, thereby reducing a duration for measuring the SSBs by the first apparatus and reducing power consumption of the first apparatus.

Optionally, the first apparatus may further perform other processing based on the second correspondence in the second time period. For example, the first apparatus may merge system information (for example, SIB1, SIB19, SIB1bis, or OSI) corresponding to adjacent SSBs during access, thereby improving performance.

In some possible implementations, the method shown in FIG. 3 further includes S304.

**S304**: The second apparatus sends fifth information to the first apparatus. Correspondingly, the first apparatus receives the fifth information from the second apparatus in a cell search and/or a random access process.

The fifth information may be used to determine a third correspondence, where the third correspondence is a correspondence between a plurality of third areas and a plurality of SSBs in a third time period, and the plurality of third areas are a plurality of areas within the coverage area of the second apparatus in the third time period. For specific content of the fifth information, refer to the description of the first information in S301, where only the first information is replaced with the fifth information, the first correspondence is replaced with the third correspondence, the first area is replaced with the third area, and the first time period is replaced with the third time period. Details are not described herein again. The third time period may be before the first time period. Optionally, the third time period and the first time period are consecutive.

Optionally, the third correspondence may be one of the M correspondences in S301. The third correspondence and the first correspondence may be different.

After S304, S301 may include step B1.

**Step B1: The first apparatus completes random access, and the first apparatus receives first information from the second apparatus.**

For example, after the random access of the first apparatus is complete, the first apparatus may receive the first information from the second apparatus.

It should be understood that, in S304, the time at which the first apparatus receives the fifth information may be a time in the middle of the third time period. If the first apparatus uses the time at which the fifth information is received as the start time of the third time period, and based on the start time, If the correspondence between the multiple areas and the multiple SSBs in the coverage area of the second apparatus in the subsequent time period is determined, an incorrect correspondence may be obtained. For example, within the 0th second to the 9th second (that is, the third time period is the 0th second to the 9th second), the correspondence between the multiple areas within the coverage area of the second apparatus and the multiple SSBs is the third correspondence. Within the 10th second to the 18th second, the correspondence between the multiple areas within the coverage area of the second apparatus and the multiple SSBs is the first correspondence. If the first apparatus receives the fifth information at the eighth second, the first apparatus considers the eighth second as the start time in the third time period, and therefore considers the correspondence between the multiple areas and the multiple SSBs in the coverage area of the second apparatus within the eighth to the seventeenth second as the third correspondence. In this way, the first apparatus and the second apparatus have different understandings of the correspondence between the multiple areas and the multiple SSBs in the coverage area of the second apparatus within the 10th to the 17th second. According to the method shown in this application, after the first apparatus completes random access, the first apparatus may receive the first information from the second apparatus, so as to modify the correspondence between the plurality of areas and the plurality of SSBs in the coverage area of the second apparatus based on the first information. so that the first apparatus and the second apparatus have a consistent understanding of the correspondence between the plurality of areas and the plurality of SSBs in the coverage area of the second apparatus.

Optionally, after a first time length following random access completion of the first apparatus, the first apparatus may receive the first information from the second apparatus; in other words, the first information may be received by the first apparatus after the first time length following random access completion of the first apparatus.

There may be a plurality of manners for determining the first time length, for example, manner c1 or manner c2.

**Manner c1**: The first time length is determined based on the location of the first apparatus at the second time, the coverage area of the area in which the first apparatus is located, and the location information of the second apparatus.

The second time is related to a time at which the first apparatus receives the first information. For example, a sum of the second time and the first time length is a time at which the first apparatus receives the first information. In addition, the second time may be further related to a time at which the first apparatus completes random access. For example, the second time is a time at which the first apparatus completes random access. For another example, the second time is a sum of the time at which the first apparatus completes random access and an offset value 2. The offset value 2 may be a positive number or a negative number. The offset value 2 may be preset, for example, specified in a protocol; or may be determined by the first apparatus or the second apparatus.

The location information of the second apparatus may indicate at least one of the following: a movement speed or a movement direction of the second apparatus. The location information of the second apparatus may be sent by the second apparatus to the first apparatus, or may be obtained by the first apparatus from the ephemeris information of the second apparatus.

For example, the first duration may meet the following formula: t1=d2/v, where t1 is the first duration, d2 is a distance between a location of the first apparatus at the second time and an edge location of the coverage area of the region in which the first apparatus is located along the movement direction of the second apparatus, and v is the movement speed of the second apparatus.

According to the manner c1, the first apparatus may quickly and accurately determine the time for starting to receive the first information based on the location of the first apparatus at the second time, the coverage area of the region in which the first apparatus is located, and the location information of the second apparatus.

**Manner c2**: The first duration is determined based on the first parameter, the first range, and the location information of the second apparatus. The first parameter may be determined based on a connection line between the first point at a second time and the second apparatus, where the first point may be a reference point in the region in which the first apparatus is located, for example, the first point is a center point of the region in which the first apparatus is located. The first range may be a range of the parameter determined based on the connection line between the first point and the second apparatus when the first apparatus is located in the region in which the first apparatus is located.

For specific content of the location information of the second apparatus, refer to the description of the location information of the second apparatus in Manner c1. For specific content of the second time, refer to the description of the second time in Manner c1. Details are not described herein again.

In some implementations, the first parameter may be an included angle between the line connecting the first point of the second time and the second apparatus and the reference plane; and the first range is a range of the included angle between the line connecting the first point and the second apparatus and the reference plane when the first apparatus is located in the area where the first apparatus is located. The reference plane may be a first specified plane, for example, a vertical plane or the ground.

For example, when the second apparatus is located between the position 3 and the position 4, the correspondence between the plurality of areas covered by the second apparatus and the plurality of SSBs is the correspondence shown in FIG. 4A; when the second apparatus is located at the position 4, the correspondence between the plurality of areas covered by the second apparatus and the plurality of SSBs is the correspondence shown in FIG. 4B. As shown in FIG. 4C, at the second time, the second apparatus is located between the position 3 and the position 4, and the first apparatus is located in the area corresponding to the SSB 16. The first point is a center point of the area corresponding to the SSB 16. At the second time, an included angle between the line connecting the first point and the second apparatus and the ground is. The first range is, that is, when the first apparatus is located in the area corresponding to the SSB 16, the included angle between the line connecting the first point and the second apparatus and the ground is within the range. In this way, the first apparatus may determine, based on the first time length and the location information of the second apparatus, that the first apparatus is no longer located in the area corresponding to the SSB 16 after the first time length. ${α}_{t 3}^{16} \left[{α}_{t 2}^{16}, {α}_{t 2 + Δt}^{16}\right] \left[{α}_{t 2}^{16}, {α}_{t 2 + Δt}^{16}\right] {α}_{t 3}^{16} \left[{α}_{t 2}^{16}, {α}_{t 2 + Δt}^{16}\right]$

For example, the first duration may meet the following formula: t1=d3/v, where t1 is the first duration, d3 is a distance between the position 4 and the position of the second apparatus at the second time, and v is a movement speed of the second apparatus. The location information of the second apparatus may include the movement speed and the height of the second apparatus. d3 may be determined according to the height of the second apparatus and the, for example, if the height of the second apparatus is h, $d 3 = h * \left(ctan-ctan\right) . {α}_{t 3}^{16} {α}_{t 2 + Δt}^{16} {α}_{t 2 + Δt}^{16} {α}_{t 3}^{16}$

Through this implementation, the first apparatus can quickly and accurately determine the first duration based on an included angle between the line connecting the first point at the second time and the second apparatus and the reference plane, and a range of included angles between the line connecting the first point and the second apparatus and the reference plane when the first apparatus is located in the area where the first apparatus is located.

In some other implementations, the first parameter may be a length of the line connecting the first point at the second time and the second apparatus after being mapped to the reference plane; and the first range may be a range of the length of the line connecting the first point and the second apparatus after being mapped to the reference plane when the first apparatus is located in the area where the first apparatus is located. The reference plane may be a second specified plane, for example, the ground.

For example, when the second apparatus is located between the position 3 and the position 4, a correspondence between a plurality of areas covered by the second apparatus and a plurality of SSBs is the correspondence shown in FIG. 4A; when the second apparatus is located at the position 4, a correspondence between a plurality of areas covered by the second apparatus and a plurality of SSBs is the correspondence shown in FIG. 4B. As shown in FIG. 4C, at a second time, the second apparatus is located between the position 3 and the position 4, and the first apparatus is located in an area corresponding to the SSB 16. The first point is a center point of the area corresponding to the SSB 16. At the second time, a length of a line connecting the first point and the second apparatus after the line is mapped to the ground is. The first range is, that is, when the first apparatus is located in the area corresponding to the SSB 16, a length of a line connecting the first point and the second apparatus after the line is mapped to the ground is within the first range. In this way, the first apparatus may determine, based on, and the location information of the second apparatus, the first time length, and then determine that the first apparatus is no longer located in the area corresponding to the SSB $16 . {d}_{t 3}^{16} \left[{d}_{t 2}^{16}, {d}_{t 2 + Δt}^{16}\right] \left[{d}_{t 2}^{16}, {d}_{t 2 + Δt}^{16}\right] {d}_{t 3}^{16} \left[{d}_{t 2}^{16}, {d}_{t 2 + Δt}^{16}\right]$

For example, the first duration may meet the following formula: t1=d3/v, where t1 is the first duration, d3 is a distance between the location 4 and the location of the second apparatus at the second time, and v is a movement speed of the second apparatus. The location information of the second apparatus may include the movement speed of the second apparatus, and d3 may be determined according to and. For example, $d 3 = . {d}_{t 3}^{16} {d}_{t 2 + Δt}^{16} {d}_{t 2 + Δt}^{16} - {d}_{t 3}^{16}$

Optionally, in the manner c2, the first apparatus may obtain, by using step C1, the range indication information used to indicate the first range.

**Step C1**: The second apparatus sends the range indication information to the first apparatus. Correspondingly, the first apparatus receives the range indication information from the second apparatus.

The second apparatus may actively send the range indication information to the first apparatus. For example, the second apparatus may periodically send the range indication information; or the second apparatus may send the range indication information to the first apparatus based on a request from the first apparatus. The range indication information may be carried in a conventional message, or may be carried in a new message.

The range indication information may explicitly indicate the first range, for example, the range indication information includes the first range; or the range indication information may implicitly indicate the first range, for example, the range indication information includes information corresponding to the first range.

By performing this step, the first apparatus can obtain the first range in a timely manner.

In some possible implementations, before S301, the method shown in FIG. 3 further includes S305 to S306.

**S305**: The second apparatus sends sixth information to the first apparatus. Correspondingly, the first apparatus receives the sixth information from the second apparatus.

The sixth information is used to determine a fourth correspondence, where the fourth correspondence is a correspondence between a plurality of fourth areas and a plurality of SSBs in a fourth time period, and the plurality of fourth areas are a plurality of areas within a coverage area of the second apparatus in the fourth time period. For specific content of the sixth information, refer to the description of the first information in S301. The first information is simply replaced with the sixth information, the first correspondence is replaced with the fourth correspondence, the first area is replaced with the fourth area, and the first time period is replaced with the fourth time period. Details are not described herein again. The fourth time period may be before the first time period, and the fourth time period and the first time period may be consecutive or inconsecutive.

Optionally, the fourth correspondence may be one of the M correspondences in S301. The fourth correspondence may be different from the first correspondence.

**S306**: The second apparatus sends first indication information to the first apparatus; correspondingly, the first apparatus receives the first indication information from the second apparatus. The first indication information is used to indicate that a correspondence between a plurality of areas in the coverage area of the second apparatus and a plurality of SSBs changes.

For specific content of S306, refer to step A1. Details are not described again.

After receiving the first indication information, the first apparatus may perform step S301, that is, the first apparatus may receive the first information from the second apparatus; in other words, the first indication information may be used to trigger (or indicate) the first apparatus to receive the first information, thereby triggering the first apparatus to update the correspondence between the plurality of areas in the coverage area of the second apparatus and the plurality of SSBs in a timely manner.

In some possible implementations, before S301, the method shown in FIG. 3 further includes S307.

**S307**: The second apparatus sends second indication information to the first apparatus; correspondingly, the first apparatus receives the second indication information from the second apparatus. The second indication information may be used to indicate whether a correspondence between a plurality of areas in the coverage area of the second apparatus and a plurality of SSBs is variable.

In some implementations, the second indication information may indicate whether the correspondence between the plurality of areas in the coverage area of the second apparatus and the plurality of SSBs is variable. For example, a value of the second indication information is a second value (for example, 0), indicating that the correspondence between the plurality of areas in the coverage area of the second apparatus and the plurality of SSBs is variable. In this case, the first apparatus may determine the second correspondence based on the first correspondence. For another example, a value of the second indication information is a third value (for example, 1), indicating that the correspondence between the plurality of areas in the coverage area of the second apparatus and the plurality of SSBs is not variable. In this implementation, the second indication information may also have another name, for example, an acquire new pattern (AcquireNewPattern) parameter.

In some other implementations, the second indication information may implicitly indicate whether the correspondence between the plurality of areas in the coverage of the second apparatus and the plurality of SSBs is variable. In some examples, if the value of the second indication information falls within the first value range, the value of the second indication information may be used to indicate that the correspondence between the plurality of areas in the coverage of the second apparatus and the plurality of SSBs remains unchanged, and is used to indicate the correspondence between the plurality of areas in the coverage of the second apparatus and the plurality of SSBs. The first value range may include one or more values. For example, the first value range includes [-1, -2, -3,..., -M]. -j is any integer from -1 to -M, and when the value of the second indication information is -j, the correspondence between the plurality of areas in the coverage of the second apparatus and the plurality of SSBs remains unchanged, and is the jth correspondence among the M correspondences in S301. In some other examples, if the value of the second indication information falls within the second value range, the value of the second indication information may be used to indicate that the correspondence between the plurality of areas in the coverage of the second apparatus and the plurality of SSBs is variable, and is used to indicate the correspondence between the plurality of areas in the coverage of the second apparatus and the plurality of SSBs. In this example, the second indication information may be information 7 in the first information, and the second value range may include [1, 2, 3,..., M]. Through this example, the first apparatus may determine, based on the value of the second indication information, whether the correspondence between the plurality of areas in the coverage of the second apparatus and the plurality of SSBs is variable, without the need to indicate, by using additional information, whether the correspondence between the plurality of areas in the coverage of the second apparatus and the plurality of SSBs is variable, thereby saving signaling overheads.

The second indication information may be carried in a conventional message (for example, a system message or RRC signaling), or may be carried in a new message. The second indication information and the first information may be carried in a same message, or may be carried in different messages.

By using this method, the first apparatus can learn in a timely manner whether the correspondence between the plurality of areas in the coverage area of the second apparatus and the plurality of SSBs is variable, thereby being compatible with both a ground fixed area and a beam following an access network device.

In the method shown in FIG. 3, within the first time period, the correspondence between the plurality of areas in the coverage area of the second apparatus and the plurality of SSBs remains unchanged, and each is the first correspondence; after the first time period, there is an association relationship between the correspondence between the plurality of areas in the coverage area of the second apparatus and the plurality of SSBs and the first correspondence. The first apparatus may determine, based on the association relationship and the first correspondence, the correspondence between the plurality of areas in the coverage area of the second apparatus and the plurality of SSBs after the first time period, so that the first apparatus can determine the area in which the first apparatus is located and the coverage information around the area, thereby improving mobility management performance, implementing precise SSB measurement, and reducing measurement overheads. For example, the first apparatus may measure, within an SMTC window delivered by the network side, the SSB corresponding to the area in which the first apparatus is located and/or the SSB corresponding to an area around the area in which the first apparatus is located, based on the determined area in which the first apparatus is located and the coverage information around the area, thereby implementing precise SSB measurement and reducing measurement overheads. In addition, within the first time period, system information associated with different SSB indexes is the same. Therefore, the first apparatus may combine system information corresponding to system information indexes that are the same or system information indexes associated with SSBs corresponding to areas that are adjacent in geographical location, thereby improving accuracy of the parsed system information, and also reducing a time for obtaining system information and an access delay.

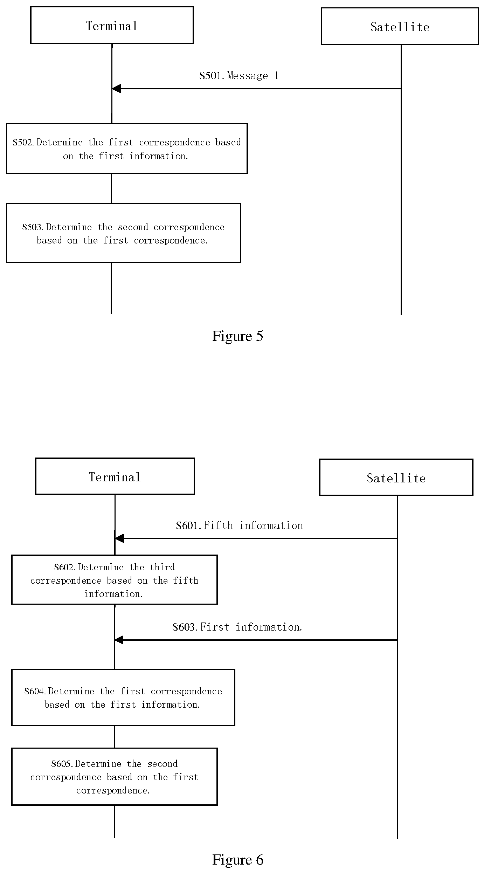

Embodiments of this application provide another communication method. FIG. 5 is a flowchart of the communication method. The method is a possible example of the method shown in FIG. 3. The method is described by using an example in which the first apparatus is a terminal and the second apparatus is a satellite. In the method, a satellite sends information indicating a start time of a first time period to a terminal, and the terminal determines a second correspondence based on the start time of the first time period and a first correspondence. As shown in FIG. 5, the method includes the following steps:
**S501**: A satellite sends a message 1 to a terminal. Correspondingly, the terminal receives the message 1 from the satellite.

The message 1 includes first information and fourth information. The first information may be used to determine the first correspondence. The first correspondence is a correspondence between a plurality of first areas and a plurality of SSBs in a first time period, where the plurality of first areas are a plurality of areas covered by the satellite in the first time period. For specific content of the first information, refer to the description of the first information in S301, and details are not described herein again. The fourth information may be used to indicate a start time of the first time period. For specific content of the fourth information, refer to the description of the fourth information in Manner a1, and details are not described herein again.

The message 1 may be broadcast information, where the broadcast information is, for example, system information (for example, SIB1, SIB19, SIB1bis, or OSI) or RRC signaling.

**S502**: The terminal determines the first correspondence based on the first information.

For specific content of S502, refer to the description of "the first apparatus may determine the first correspondence based on the first information" in S301. Details are not described herein again.

**S503**: The terminal determines a second correspondence based on the first correspondence, where the second correspondence is a correspondence between a plurality of second areas and a plurality of SSBs in a second time period.

For specific content of S503, refer to the reference manner a1. For specific content of the second correspondence, refer to the description of the second correspondence in S302. Details are not described herein again.

The method shown in FIG. 5 can achieve the effect of the method shown in FIG. 3, and repeated parts are not described again. In addition, in this method, the satellite sends information indicating the start time of the first time period to the terminal. In this way, the first time period determined by the terminal and the satellite is the same, thereby avoiding an inconsistency between the terminal and the satellite in understanding the effective time of the first correspondence, and thereby avoiding affecting communication between the terminal and the satellite.

An embodiment of this application provides still another communication method. FIG. 6 is a flowchart of the communication method. The method is another possible example of the method shown in FIG. 3. The method is described by using an example in which the first apparatus is a terminal and the second apparatus is a satellite. In this method, after a first duration following completion of random access, the terminal receives first information, and updates, based on the first information, the correspondence between the plurality of areas within the coverage of the satellite and the plurality of SSBs. The first duration is determined based on the location of the terminal at a second time, the coverage of the area in which the terminal is located, and the location information of the satellite. As shown in FIG. 6, the method includes:
**S601**: The satellite sends fifth information to the terminal; correspondingly, the terminal receives the fifth information from the satellite during an initial access process (for example, a cell search and/or a random access process). The fifth information may be used to determine a third correspondence, where the third correspondence is a correspondence between a plurality of third areas and a plurality of SSBs in a third time period, and the plurality of third areas are a plurality of areas covered by the satellite in the third time period.

For specific content of S601, refer to S304, and details are not described herein again.

**S602**: The terminal determines the third correspondence based on the fifth information.

For specific content of S602, refer to the description of "the first apparatus may determine the first correspondence based on the first information" in S301, where the first information is replaced with the fifth information, and the first correspondence is replaced with the third correspondence. Details are not described herein again.

**S603**: The satellite sends first information to the terminal; correspondingly, after a first time length following completion of random access by the terminal, the terminal may receive the first information from the satellite. The first information may be used to determine a first correspondence. The first correspondence is a correspondence between a plurality of first areas and a plurality of SSBs in a first time period, and the plurality of first areas are a plurality of areas covered by the satellite in the first time period.

For specific content of S603, refer to step B1. For specific content of the first information, refer to the description of the first information in S301. Repeated parts are not described again.

The first duration is determined based on the location of the terminal at the second time, the coverage area of the area in which the terminal is located, and the location information of the satellite. For specific content, refer to Manner c1, and details are not described herein again.

**S604**: The terminal determines the first correspondence based on the first information.

For specific content of S604, refer to the description of "the first apparatus may determine the first correspondence based on the first information" in S301. Details are not described herein again.

**S605**: The terminal determines a second correspondence based on the first correspondence. The second correspondence is a correspondence between a plurality of second areas and a plurality of SSBs in a second time period.

Specific content of S605 may be learned from Reference manner a1. For specific content of the second correspondence, refer to the description of the second correspondence in S302, and details are not described herein again.

The method shown in FIG. 6 can achieve the effect of the method shown in FIG. 3, and repeated parts are not described again. In addition, the time at which the terminal receives the fifth information may be a time point in the middle of the third time period. If the terminal uses the time at which the fifth information is received as a start time of the third time period, and determines, based on the start time, the correspondence between the plurality of areas in the coverage area of the satellite and the plurality of SSBs in the subsequent time periods, an incorrect correspondence may be obtained. According to the method shown in FIG. 6, after the first duration following the completion of random access by the terminal, the terminal may receive the first information from the satellite, so as to correct the correspondence between the plurality of areas in the coverage area of the satellite and the plurality of SSBs based on the first information, thereby making the terminal and the satellite have a consistent understanding of the correspondence between the plurality of areas in the coverage area of the satellite and the plurality of SSBs.

In addition, in this method, the signaling overhead between the terminal and the satellite is relatively small.

It is assumed that a correspondence between multiple areas covered by the satellite and multiple SSBs includes 16 rows and 16 columns. There may be 16 correspondences between the multiple areas covered by the satellite and the multiple SSBs. An association relationship between the first correspondence and the initial correspondence (namely, the information 7 in S301) may be indicated (or indicated by) 5 bits, where 4 bits are used to indicate the association relationship between the first correspondence and the initial correspondence, and 1 bit is used to indicate whether the correspondence between the multiple areas covered by the satellite and the multiple SSBs is variable.

A quantity of first areas in the coverage areas of the plurality of first areas along the third direction (namely, the information 1 in S301) may be indicated by 4 bits. A quantity of first areas in the coverage areas of the plurality of first areas along the fourth direction (namely, the information 3 in S301) may be indicated by 4 bits. In an initial correspondence between the multiple areas covered by the satellite and the multiple SSBs, an arrangement order of the multiple SSBs (namely, the information 6 in S301) may be indicated by 1 bit. A location of the reference area in the plurality of first areas (namely, the information 5 in S301) is an initial area in the plurality of first areas, where a horizontal offset of the initial area relative to the reference position may be indicated by 4 bits, and a vertical offset of the initial area relative to the reference position may be indicated by 4 bits.

The bit quantity corresponding to the radius, diameter, or side length of each of the plurality of first areas in the third direction (namely, information 2 in S301) and the bit quantity corresponding to the radius, diameter, or side length of each of the plurality of first areas in the fourth direction (namely, information 4 in S301) are related to the precision. Assuming that the information 2 is 50 km, the information 4 is 55 km, and the precision is 1 km, the information 2 and the information 4 may be indicated by 6 bits respectively.

In conclusion, the first information may indicate the first correspondence by using 5+4+4+1+4+4+6+6=34 bits.

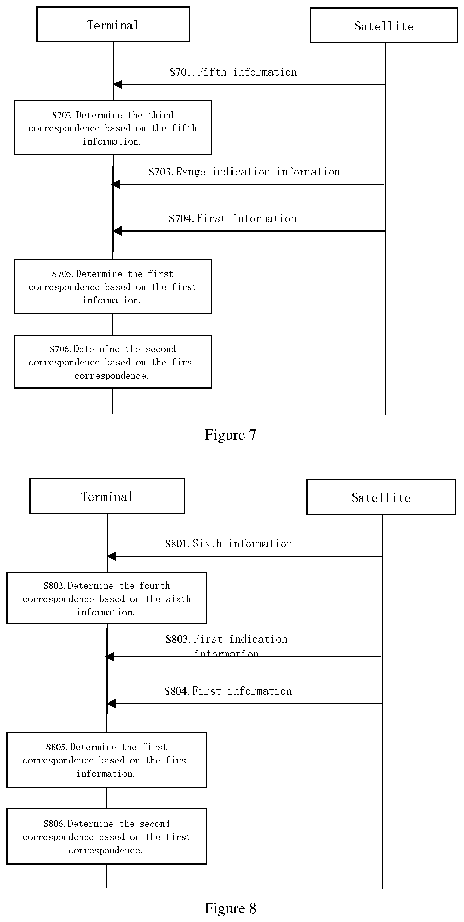

An embodiment of this application provides still another communication method. FIG. 7 is a flowchart of the communication method. The method is still another possible example of the method shown in FIG. 3. The method is described by using an example in which the first apparatus is a terminal and the second apparatus is a satellite. In the method, after a first time length following completion of random access, the terminal receives first information, and updates, based on the first information, a correspondence between a plurality of areas within a coverage area of the satellite and a plurality of SSBs. The first time length is determined based on a first parameter, a first range, and the location information of the satellite. As shown in FIG. 7, the method includes the following steps:
**S701**: The satellite sends fifth information to the terminal. Correspondingly, the terminal receives the fifth information from the satellite in an initial access process (for example, a cell search and/or a random access process). The fifth information may be used to determine a third correspondence, where the third correspondence is a correspondence between a plurality of third areas and a plurality of SSBs in a third time period, and the plurality of third areas are a plurality of areas covered by the satellite in the third time period.
**S702**: The terminal determines the third correspondence based on the fifth information.

For specific content of S701 to S702, refer to S601 to S602.

**S703**: The satellite sends range indication information to the terminal. Correspondingly, the terminal receives the range indication information from the satellite. The range indication information may be used to indicate a first range.

For specific content of S703, refer to step C1. For specific content of the first range, refer to the description of the first range in Manner c2. Details are not described herein again.

**S704**: The satellite sends first information to the terminal. Correspondingly, after a first duration following the completion of random access by the terminal, the terminal may receive the first information from the satellite. The first information may be used to determine a first correspondence. The first correspondence is a correspondence between a plurality of first areas and a plurality of SSBs within a first time period, where the plurality of first areas are a plurality of areas covered by the satellite within the first time period.

For specific content of S704, refer to step B1. For specific content of the first information, refer to the description of the first information in S301. Repeated parts are not described again.

The first duration is determined based on the first parameter, the first range, and the location information of the satellite. For specific content, refer to method c2, and details are not described herein again.

**S705**: The terminal determines the first correspondence based on the first information.

**S706**: The terminal determines a second correspondence based on the first correspondence. The second correspondence is a correspondence between a plurality of second areas and a plurality of SSBs within a second time period.

For specific content of S705 to S706, refer to reference manners S604 to S605, and details are not described herein again.

The method shown in FIG. 7 can achieve the effect of the method shown in FIG. 3, and repeated parts are not described again. In addition, the time at which the terminal receives the fifth information may be a time point in the middle of the third time period. If the terminal uses the time at which the fifth information is received as a start time of the third time period, and determines, based on the start time, the correspondence between the plurality of areas in the coverage area of the satellite and the plurality of SSBs in the subsequent time period, an incorrect correspondence may be obtained. According to the method shown in FIG. 7, after the first duration following the completion of random access by the terminal, the terminal may receive the first information from the satellite, so as to correct, based on the first information, the correspondence between the plurality of areas in the coverage area of the satellite and the plurality of SSBs, thereby making the terminal and the satellite have a consistent understanding of the correspondence between the plurality of areas in the coverage area of the satellite and the plurality of SSBs.

In this method, the signaling overhead between the terminal and the satellite is relatively small. The following uses an example in which the first parameter may be an included angle between the first point of the second time period and the satellite and the reference plane for description.

It is assumed that a correspondence between multiple areas within the coverage of the satellite and multiple SSBs includes 16 rows and 16 columns. There may be 16 types of correspondence between the multiple areas within the coverage of the satellite and the multiple SSBs. An association relationship between the first correspondence and the initial correspondence (that is, information 7 in S301) may be indicated by using 5 bits, where 4 bits are used to indicate the association relationship between the first correspondence and the initial correspondence, and 1 bit is used to indicate whether the correspondence between the multiple areas within the coverage of the satellite and the multiple SSBs is variable.

A quantity of first areas in the coverage of the multiple first areas along a third direction (that is, information 1 in S301) may be indicated by using 4 bits. A quantity of first areas in the coverage of the multiple first areas along a fourth direction (that is, information 3 in S301) may be indicated by using 4 bits. In an initial correspondence between the multiple areas within the coverage of the satellite and the multiple SSBs, an arrangement order of the multiple SSBs (that is, information 6 in S301) may be indicated by using 1 bit. A location of a reference area in the multiple first areas (that is, information 5 in S301) is an initial area among the multiple first areas. A horizontal offset of the initial area relative to the reference position may be indicated by using 4 bits, and a vertical offset of the initial area relative to the reference position may be indicated by using 4 bits.

The bit quantity corresponding to the radius, diameter, or side length of each of the plurality of first areas in the third direction (namely, information 2 in S301) and the bit quantity corresponding to the radius, diameter, or side length of each of the plurality of first areas in the fourth direction (namely, information 4 in S301) are related to the precision. Assuming that the information 2 is 50 km, the information 4 is 55 km, and the precision is 1 km, the information 2 and the information 4 may each be indicated by using 6 bits.

The bit quantity of the range indication information is related to the precision. Assuming that the precision is 0.5 degree (°), for each row in the correspondence between the plurality of areas in the satellite coverage area and the plurality of SSBs, if an angle range in a horizontal direction is ± 50°, there are 100°/0.5°=200 cases, and an angle in the horizontal direction may be indicated by using 8 bits (which may indicate 256 cases); or if an angle range in a vertical direction is ± 50°, an angle in the vertical direction may be indicated by using 8 bits. The bit quantity of the range indication information is (bit quantity of a horizontal angle range + bit quantity of a vertical angle range) * M rows, which is equal to (8+8)*16=256.2⁸

In conclusion, the signaling overhead of the first information and the range indication information is 5+4+4+1+8+12+256=290 bits.

An embodiment of this application provides still another communication method. FIG. 8 is a flowchart of the communication method. The method is still another possible example of the method shown in FIG. 3. The method is described by using an example in which the first apparatus is a terminal and the second apparatus is a satellite. In the method, after receiving the first indication information from the satellite, the terminal may update a correspondence between a plurality of areas within the coverage of the satellite and a plurality of SSBs. The first indication information may be used to indicate that a correspondence between a plurality of areas within the coverage of the satellite and a plurality of SSBs changes. As shown in FIG. 8, the method includes the following steps:
**S801**: A satellite sends sixth information to a terminal; correspondingly, the terminal receives the sixth information from the satellite. The sixth information may be used to determine a fourth correspondence, where the fourth correspondence is a correspondence between a plurality of fourth areas and a plurality of SSBs in a fourth time period, and the plurality of fourth areas are a plurality of areas within the coverage of the satellite in the fourth time period.

For specific content of S801, refer to S305, and details are not described herein again.

**S802**: The terminal determines the fourth correspondence based on the sixth information.

For specific content of S802, refer to the description of "the first apparatus may determine the first correspondence based on the first information" in S301, where the first information is replaced with the sixth information, and the first correspondence is replaced with the fourth correspondence. Details are not described herein again.

**S803**: The satellite sends first indication information to the terminal; correspondingly, the terminal receives the first indication information from the satellite. The first indication information is used to indicate that a correspondence between a plurality of areas in the coverage area of the satellite and a plurality of SSBs changes.

For specific content of S803, refer to S306, and details are not described herein again.

**S804**: The satellite sends first information to the terminal. Correspondingly, after receiving the first indication information, the terminal may receive the first information from the satellite. The first information may be used to determine a first correspondence. The first correspondence is a correspondence between a plurality of first areas and a plurality of SSBs in a first time period, where the plurality of first areas are a plurality of areas covered by the satellite in the first time period.

For specific content of S804, refer to S301, and details are not described herein again.

**S805**: The terminal determines the first correspondence based on the first information.

**S806**: The terminal determines a second correspondence based on the first correspondence, where the second correspondence is a correspondence between a plurality of second areas and a plurality of SSBs in a second time period.

For specific content of S805 to S806, refer to the reference manner S604 to S605, and details are not described herein again.

The method shown in FIG. 8 can achieve the effect of the method shown in FIG. 3, and repeated parts are not described again. In addition, the terminal may update the correspondence between the plurality of areas within the coverage of the satellite and the plurality of SSBs in a timely manner based on the first indication information from the satellite, so that the terminal and the satellite have a consistent understanding of the correspondence between the plurality of areas within the coverage of the satellite and the plurality of SSBs.

Based on the same technical concept as the foregoing method embodiments, embodiments of this application provide a corresponding communication apparatus, which may be configured to perform functions of the related steps in the foregoing method embodiments. The function may be implemented by hardware, or may be implemented by software, or may be implemented by hardware executing corresponding software. The hardware or software includes one or more modules corresponding to the foregoing functions. The communication apparatus may be a terminal, or may be a module (for example, a circuit or a chip) in a terminal, or may be a logical node, a logical module, or software that can implement all or a part of the functions of the terminal or the access network device; or the communication apparatus may be an access network device, or a module (for example, a circuit or a chip) in an access network device, or may be a logical node, a logical module, or software that can implement all or a part of the functions of the access network device.

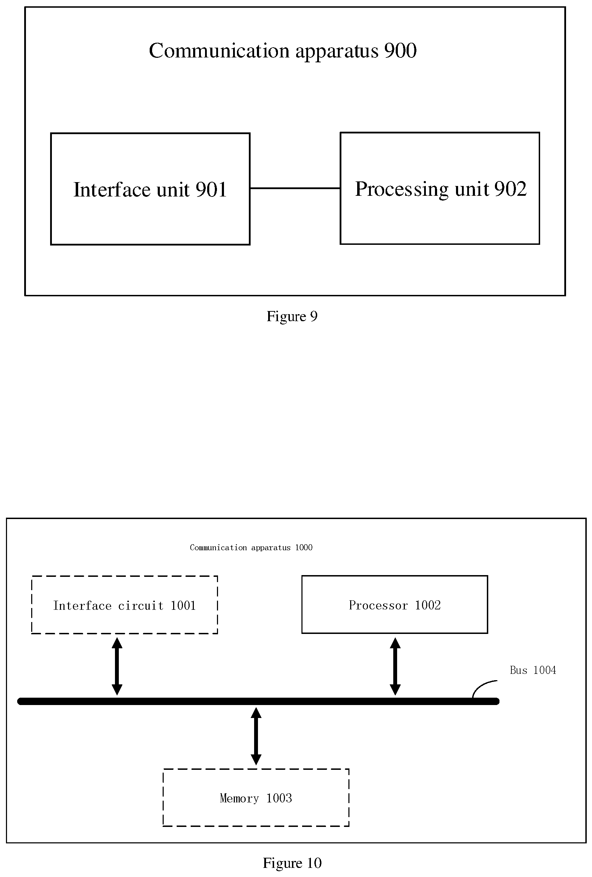

In a possible implementation, the structure of the communication apparatus provided in this embodiment of this application is shown in FIG. 9, and includes a processing unit 902. Optionally, the communication apparatus further includes an interface unit 901. The following describes the functions of each unit in the communication apparatus 900.

The interface unit 901 is configured to input and/or output information. The input information may be replaced with received information, and the output information may be replaced with sent information. When outputting information, the interface unit 901 may output the information to another apparatus outside the communication apparatus 900, or may output the information to another unit within the communication apparatus 900. In some implementations, the interface unit 901 may be implemented by using at least one of a physical interface, a communication module, a communication interface, or an input/output interface. In other implementations, the interface unit 901 may be implemented by using an interface circuit, for example, a mobile communication module. The mobile communication module may include one or more of an antenna, a filter, a switch, a power amplifier, a low noise amplifier (low noise amplifier, LNA), or the like.

The processing unit 902 may be configured to support the communications apparatus 900 in performing the processing actions in the foregoing method embodiments. The processing unit 902 may be implemented by one or more processors. For example, the processor may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an implementation, the communication apparatus 900 is applied to the first apparatus in the embodiment of this application shown in FIG. 3. The following describes specific functions of the processing unit 902 in this implementation.

The processing unit 902 is configured to: receive, by using the interface unit 901, first information from a second apparatus, where the first information is used to determine a first correspondence, the first correspondence is a correspondence between a plurality of first areas and a plurality of SSBs in a first time period, and the plurality of first areas are a plurality of areas within a coverage area of the second apparatus in the first time period; and determine a second correspondence based on the first correspondence, where the second correspondence is a correspondence between a plurality of second areas and a plurality of SSBs in a second time period, the second time period is after the first time period, and the plurality of second areas are a plurality of areas within a coverage area of the second apparatus in the second time period.

In some possible implementations, the processing unit 902 is specifically configured to determine the second correspondence based on the start time of the first time period, the duration of the first time period, and the first correspondence.

Optionally, the processing unit 902 is further configured to: receive second information from the second apparatus by using the interface unit 901, where the second information is used to indicate the duration; or receive third information from the second apparatus by using the interface unit 901, where the third information is used to indicate a radius, a diameter, or a side length of an area in which the first apparatus is located in the plurality of first areas, and the radius, the diameter, or the side length of the area in which the first apparatus is located is used to determine the duration.

For example, the processing unit 902 is further configured to: receive fourth information from the second apparatus by using the interface unit 901, where the fourth information is used to indicate a start time of the first time period.

In some implementations, the processing unit 902 is further configured to: receive, from the second apparatus, fifth information during a cell search and/or a random access process by using the interface unit 901, where the fifth information is used to determine a third correspondence, the third correspondence is a correspondence between a plurality of third areas and a plurality of SSBs in a third time period, and the plurality of third areas are a plurality of areas within coverage of the second apparatus in the third time period; and receive, after the random access is completed, the first information from the second apparatus by using the interface unit 901.

In some examples, the processing unit 902 is specifically configured to: receive, after a first time length from when the first apparatus completes random access, the first information from the second apparatus through the interface unit 901, where the first time length is determined based on the location of the first apparatus at a second time, the coverage area of the area where the first apparatus is located, and the location information of the second apparatus, and the second time is related to a time when the first apparatus receives the first information.

In some other examples, the processing unit 902 is specifically configured to: receive, after a first time length from when the first apparatus completes random access, the first information from the second apparatus through the interface unit 901, where the first time length is determined based on a first parameter, a first range, and the location information of the second apparatus, the first parameter is determined based on a connection line between a first point at a second time and the second apparatus, the first point is a reference point in an area where the first apparatus is located, the first range is a range of a parameter determined based on the connection line between the first point and the second apparatus when the first apparatus is located in the area where the first apparatus is located, and the second time is related to a time when the first apparatus receives the first information.

Optionally, the processing unit 902 is further configured to receive the range indication information from the second apparatus by using the interface unit 901, where the range indication information is used to indicate the first range.

In some other implementations, the processing unit 902 is further configured to: before receiving the first information from the second apparatus, receive sixth information from the second apparatus by using the interface unit 901, where the sixth information is used to determine a fourth correspondence, the fourth correspondence is a correspondence between a plurality of fourth areas and a plurality of SSBs in a fourth time period, and the plurality of fourth areas are a plurality of areas within the coverage area of the second apparatus in the fourth time period; and receive first indication information from the second apparatus by using the interface unit 901, where the first indication information is used to indicate a change in a correspondence between a plurality of areas within the coverage area of the second apparatus and a plurality of SSBs.

In some other possible implementations, the processing unit 902 is specifically configured to: receive first indication information from the second apparatus by using the interface unit 901, where the first indication information is used to indicate a change in a correspondence between a plurality of areas within the coverage area of the second apparatus and a plurality of SSBs; and determine a second correspondence based on the first correspondence and the first indication information, where a start time of the second time period is a time at which the first indication information is received.

Optionally, the processing unit 902 is further configured to receive second indication information from the second apparatus by using the interface unit 901, where the second indication information is used to indicate whether a correspondence between a plurality of areas in a coverage area of the second apparatus and a plurality of SSBs is variable.

In some implementations, the processing unit 902 is further configured to measure at least one of the plurality of SSBs in the second time period based on the second correspondence.

In another implementation, the communication apparatus 900 is applied to the second apparatus in the embodiment of this application shown in FIG. 3. The following describes specific functions of the processing unit 902 in this implementation.

The processing unit 902 is configured to: determine first information; and send the first information to the first apparatus by using the interface unit 901, where the first information is used to determine a first correspondence, the first correspondence is a correspondence between a plurality of first areas and a plurality of SSBs in a first time period, the plurality of first areas are a plurality of areas in a coverage area of the second apparatus in the first time period, the first correspondence is used to determine a second correspondence, the second correspondence is a correspondence between a plurality of second areas and a plurality of SSBs in a second time period, the second time period is after the first time period, and the plurality of second areas are a plurality of areas in a coverage area of the second apparatus in the second time period.

In some possible implementations, the processing unit 902 is further configured to: send second information to the first apparatus by using the interface unit 901, where the second information is used to indicate a duration of the first time period; or send third information to the first apparatus by using the interface unit 901, where the third information is used to indicate a radius, a diameter, or a side length of an area in which the first apparatus is located in the plurality of first areas, and the radius, the diameter, or the side length of the area in which the first apparatus is located is used to determine the duration.

Optionally, the processing unit 902 is further configured to: send fourth information to the first apparatus by using the interface unit 901, where the fourth information is used to indicate a start time of the first time period.

In some implementations, the processing unit 902 is further configured to: send fifth information to the first apparatus by using the interface unit 901 during a cell search and/or random access process of the first apparatus, where the fifth information is used to determine a third correspondence, the third correspondence is a correspondence between a plurality of third areas and a plurality of SSBs in a third time period, the plurality of third areas are a plurality of areas within a coverage area of the second apparatus in the third time period, and the first information is received by the first apparatus when the first apparatus completes random access.

Optionally, the processing unit 902 is further configured to send the range indication information to the first apparatus by using the interface unit 901, where the range indication information is used to indicate the first range.

In some other implementations, the processing unit 902 is further configured to: before sending the first information to the first apparatus, send sixth information to the first apparatus by using the interface unit 901, where the sixth information is used to determine a fourth correspondence, the fourth correspondence is a correspondence between a plurality of fourth areas and a plurality of SSBs in a fourth time period, and the plurality of fourth areas are a plurality of areas within the coverage area of the second apparatus in the fourth time period; and send the first indication information to the first apparatus by using the interface unit 901, where the first indication information is used to indicate a change in a correspondence between a plurality of areas within the coverage area of the second apparatus and a plurality of SSBs.

Optionally, the processing unit 902 is further configured to: send second indication information to the first apparatus by using the interface unit 901, where the second indication information is used to indicate whether a correspondence between a plurality of areas within the coverage area of the second apparatus and a plurality of SSBs is variable.

In some possible implementations, the processing unit 902 is further configured to send first indication information to the first apparatus by using the interface unit 901, where the first indication information is used to indicate that a correspondence between a plurality of areas in the coverage area of the second apparatus and a plurality of SSBs changes; the first indication information and the first correspondence are used to determine a second correspondence, where a start time of the second time period is a time at which the first apparatus receives the first indication information.

For more detailed descriptions of the processing unit 902 and the interface unit 901, refer to the related descriptions in the method embodiment shown in FIG. 3, which can be directly obtained, and details are not described herein again.

It should be noted that the division into the foregoing modules in the foregoing embodiments of this application is an example, and is merely a logical function division. There may be another division manner in actual implementation. In addition, the functional units in embodiments of this application may be integrated into one processing unit, or each may exist alone physically, or two or more units may be integrated into one unit. The integrated unit may be implemented in a form of a hardware, or may be implemented in a form of a software functional unit.

If the integrated units are implemented in the form of software functional units and sold or used as independent products, they may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, a network device, or the like) or a processor (processor) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In a possible implementation, referring to FIG. 10, the communication apparatus provided in this embodiment of this application includes a processor 1002. Optionally, the communication apparatus 1000 further includes an interface circuit 1001 and a memory 1003. The interface circuit 1001, the processor 1002, and the memory 1003 are coupled to each other.

Optionally, the interface circuit 1001, the processor 1002, and the memory 1003 are coupled to each other through a bus 1004. The bus 1004 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one bold line is used to indicate the bus in FIG. 10, but this does not mean that there is only one bus or only one type of bus.

The interface circuit 1001 is configured to input and/or output information. The input information may be replaced with received information, and the output information may be replaced with transmitted information. When outputting information, the interface circuit 1001 may output the information to another device outside the communication apparatus 1000, or output the information to another unit within the communication apparatus 1000. For example, the interface circuit 1001 may be implemented through at least one of a physical interface, a communication module, a communication interface, an input/output interface, or a mobile communication module. The mobile communication module may include one or more of at least one antenna, at least one filter, a switch, a power amplifier, an LNA, and the like.

The processor 1002 may be configured to support the communication apparatus 1000 in performing the processing actions in the foregoing method embodiments. When the communication apparatus 1000 is configured to implement the foregoing method embodiments, the processor 1002 may also be configured to implement the functions of the processing unit 902. The processor 1002 may be a CPU, or may be another general-purpose processor, a DSP, an ASIC, an FPGA or another programmable logic device, a transistor logic device, a hardware component, or any combination thereof. The general-purpose processor may be a microprocessor, or may be any conventional processor.

In an implementation, the communication apparatus 1000 is applied to the first apparatus in the embodiment of this application shown in FIG. 3. The following describes specific functions of the processor 1002 in this implementation.

The processor 1002 is configured to: receive, by using the interface circuit 1001, first information from a second apparatus, where the first information is used to determine a first correspondence, the first correspondence is a correspondence between a plurality of first areas and a plurality of SSBs in a first time period, and the plurality of first areas are a plurality of areas within a coverage area of the second apparatus in the first time period; and determine a second correspondence based on the first correspondence, where the second correspondence is a correspondence between a plurality of second areas and a plurality of SSBs in a second time period, the second time period is after the first time period, and the plurality of second areas are a plurality of areas within a coverage area of the second apparatus in the second time period.

In another implementation, the communication apparatus 1000 is applied to the second apparatus in the embodiment of this application shown in FIG. 3. The following describes specific functions of the processor 1002 in this implementation.

The processor 1002 is configured to: determine first information; and send the first information to the first apparatus by using the interface circuit 1001, where the first information is used to determine a first correspondence, the first correspondence is a correspondence between a plurality of first areas and a plurality of SSBs in a first time period, the plurality of first areas are a plurality of areas covered by the second apparatus in the first time period, the first correspondence is used to determine a second correspondence, the second correspondence is a correspondence between a plurality of second areas and a plurality of SSBs in a second time period, the second time period is after the first time period, and the plurality of second areas are a plurality of areas covered by the second apparatus in the second time period.

For specific functions of the processor 1002, refer to the descriptions of the communication method provided in the foregoing embodiments and examples of this application, and the specific function description of the communication apparatus 900 in the embodiment of this application shown in FIG. 9. Details are not described herein again.

The memory 1003 is configured to store program instructions and/or data. Specifically, the program instructions may include program code, and the program code includes computer operation instructions. The memory 1003 may include a RAM, and may further include a non-volatile memory (non-volatile memory), for example, at least one magnetic disk memory. The processor 1002 executes the program instructions stored in the memory 1003, and uses the data stored in the memory 1003, to implement the foregoing functions, thereby implementing the communication method provided in the embodiments of this application. The memory 1003 may be integrated with the processor 1002, or may be a memory outside the communication apparatus.

It is understood that the memory 1003 in Figure 10 of this application may be a volatile memory or a non-volatile memory, or may include both a volatile memory and a non-volatile memory. The non-volatile memory may be a ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a RAM, which is used as an external cache. By way of example and not limitation, many forms of RAM are available, such as static random access memory (static RAM, SRAM), dynamic random access memory (dynamic RAM, DRAM), synchronous dynamic random access memory (synchronous DRAM, SDRAM), double data rate synchronous dynamic random access memory (double data rate SDRAM, DDR SDRAM), enhanced synchronous dynamic random access memory (enhanced SDRAM, ESDRAM), synchlink dynamic random access memory (synchlink DRAM, SLDRAM), and direct rambus random access memory (direct rambus RAM, DR RAM). It should be noted that the memory of the systems and methods described herein is intended to include, but not limited to, these and any other suitable types of memory.

Based on the foregoing embodiments, an embodiment of this application further provides a computer program product comprising computer-executable instructions. When the computer program product is run, the method provided in the foregoing embodiments is performed.

Based on the foregoing embodiments, an embodiment of this application further provides a computer-readable storage medium, where the computer-readable storage medium stores a computer program, and when the computer program is executed by a computer, the computer is enabled to perform the method provided in the foregoing embodiments.

The storage medium may be any usable medium that can be accessed by a computer. By way of example, and not limitation, the computer-readable medium may include a RAM, a ROM, an EEPROM, a CD-ROM or other optical disc storage, a magnetic disk storage medium or other magnetic storage devices, or any other medium that can be used to carry or store expected program code in a form of an instruction or a data structure and that can be accessed by a computer.

Based on the foregoing embodiments, an embodiment of this application further provides a chip, where the chip is configured to read a computer program stored in a memory, to implement the method provided in the foregoing embodiments.

Based on the foregoing embodiments, an embodiment of this application provides a chip system. The chip system includes a processor, configured to support a computer device in implementing functions of each device in the foregoing embodiments. In a possible design, the chip system further includes a memory, where the memory is configured to store a program and data necessary for the computer device. The chip system may include a chip, or may include a chip and another discrete component.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

This application is described with reference to the flowcharts and/or block diagrams of the methods, devices (systems), and computer program products according to this application. It should be understood that computer program instructions may be used to implement each process and/or block in the flowcharts and/or block diagrams, or a combination of processes and/or blocks in the flowcharts and/or block diagrams. These computer program instructions may be provided to a processor of a general-purpose computer, a special-purpose computer, an embedded processor, or another programmable data processing device to produce a machine, so that the instructions executed by a processor of the computer or another programmable data processing device generate an apparatus for implementing a specific function in one or more processes in the flowcharts and/or in one or more blocks in the block diagrams.

These computer program instructions may also be stored in a computer-readable memory that is capable of causing a computer or other programmable data processing device to operate in a specific manner, thereby making the instructions stored in the computer-readable memory produce an article of manufacture that includes instructions for implementing the functions performed by the flowcharts and/or a block diagram and/or a block or blocks thereof.

These computer program instructions may also be loaded onto a computer or other programmable data processing device, causing a series of operational steps to be performed on the computer or other programmable device to produce processing performed by the computer or other programmable device, thereby providing steps for implementing the functions performed by the flowcharts and/or a block diagram and/or a block or blocks thereof in the computer or other programmable device.

In this application, "at least one" means one or more, and "a plurality of" means two or more. The term "and/or" describes an association relationship between associated objects, and indicates that three relationships may exist. For example, A and/or B may indicate the following three cases: only A exists, both A and B exist, and only B exists, where A and B may be singular or plural. In the text description of this application, the character "/" generally indicates an "or" relationship between the associated objects. In the formula description of this application, the character "/" generally indicates a "division" relationship between the associated objects.

It may be understood that the various numbers used in embodiments of this application are merely for differentiation for ease of description, and are not intended to limit the scope of embodiments of this application. The sequence numbers of the foregoing processes do not mean execution sequences, and the execution sequences of the processes should be determined based on functions and internal logic of the processes.

It is clearly that a person skilled in the art can make various modifications and variations to this application without departing from the scope of this application. Therefore, if these modifications and variations of this application fall within the scope of the claims of this application and their equivalent technologies, this application is also intended to include these modifications and variations.

## Claims

1. A communication method, comprising:
receiving, by a first apparatus, first information from a second apparatus, wherein the first information is used to determine a first correspondence, the first correspondence is a correspondence between a plurality of first areas and a plurality of synchronization signal and physical broadcast channel PBCH block SSBs in a first time period, and the plurality of first areas are a plurality of areas covered by the second apparatus in the first time period;
determining, by the first apparatus, a second correspondence based on the first correspondence, wherein the second correspondence is a correspondence between a plurality of second areas and the plurality of SSBs in a second time period, the second time period is after the first time period, and the plurality of second areas are a plurality of areas within the coverage area of the second apparatus in the second time period.

2. The method according to claim 1, wherein the determining, by the first apparatus, a second correspondence based on the first correspondence comprises:
determining, by the first apparatus, the second correspondence based on the start time of the first time period, the duration of the first time period, and the first correspondence.

3. The method according to claim 2, wherein the first correspondence comprises M rows and N columns, M is a quantity of areas within the coverage area of the second apparatus along a first direction, N is a quantity of areas within the coverage area of the second apparatus along a second direction, the first direction is a movement direction of the second apparatus, M and N are positive integers, the second correspondence comprises M rows and N columns, the last K rows in the first correspondence are the first K rows in the second correspondence, and the first M-K rows in the first correspondence are the last M-K rows in the second correspondence, wherein K is determined based on a quantity of areas that the second apparatus crosses from the first time period to the second time period.

4. The method according to claim 2 or 3, further comprising at least one of the following:
receiving, by the first apparatus, second information from the second apparatus, wherein the second information is used to indicate the duration; or
receiving, by the first apparatus, third information from the second apparatus, wherein the third information is used to indicate a radius, a diameter, or a side length of an area in which the first apparatus is located in the plurality of first areas, and the radius, the diameter, or the side length of the area in which the first apparatus is located is used to determine the duration.

5. The method according to any one of claims 2 to 4, further comprising:
receiving, by the first apparatus, fourth information from the second apparatus, wherein the fourth information is used to indicate a start time of the first time period.

6. The method according to any one of claims 1 to 4, further comprising:
receiving, by the first apparatus, fifth information from the second apparatus during a cell search and/or a random access process, wherein the fifth information is used to determine a third correspondence, the third correspondence is a correspondence between a plurality of third areas and the plurality of SSBs in a third time period, and the plurality of third areas are a plurality of areas covered by the second apparatus in the third time period;
the receiving, by a first apparatus, first information from a second apparatus comprises:
the first information is received after the first apparatus completes random access.

7. The method according to claim 6, wherein the first apparatus completes random access, and the receiving, by the first apparatus, the first information from the second apparatus comprises:
after a first time length following completion of random access by the first apparatus, the first apparatus receives the first information from the second apparatus, wherein the first time length is determined based on a location of the first apparatus at a second time, a coverage area of an area in which the first apparatus is located, and location information of the second apparatus, and the second time is related to a time at which the first apparatus receives the first information.

8. The method according to claim 6, wherein the first apparatus completes random access, and receiving, by the first apparatus the first information from the second apparatus, comprising:
after a first time length following completion of random access by the first apparatus, receiving, by the first apparatus the first information from the second apparatus, wherein the first time length is determined based on a first parameter, a first range, and location information of the second apparatus, wherein the first parameter is determined based on a connection line between a first point at a second time and the second apparatus, the first point is a reference point in an area in which the first apparatus is located, the first range is a range of a parameter determined based on the connection line between the first point and the second apparatus when the first apparatus is located in the area in which the first apparatus is located, and the second time is related to a time at which the first apparatus receives the first information.

9. The method according to claim 8, further comprising:
receiving, by the first apparatus, range indication information from the second apparatus, wherein the range indication information is used to indicate the first range.

10. The method according to claim 8 or 9, wherein the first parameter is an included angle between the line connecting the first point and the second apparatus at the second time and a reference plane, and the first range is a range of the included angle between the line connecting the first point and the second apparatus and the reference plane when the first apparatus is located in an area in which the first apparatus is located; or
the first parameter is a length of the line connecting the first point and the second apparatus at the second time after being mapped to the reference plane, and the first range is a range of the length of the line connecting the first point and the second apparatus after being mapped to the reference plane when the first apparatus is located in an area in which the first apparatus is located.

11. The method according to any one of claims 2 to 4, wherein before the first apparatus receives the first information from the second apparatus, the method further comprises:
receiving, by the first apparatus, sixth information from the second apparatus, wherein the sixth information is used to determine a fourth correspondence, the fourth correspondence is a correspondence between a plurality of fourth areas and the plurality of SSBs within a fourth time period, and the plurality of fourth areas are a plurality of areas within a coverage area of the second apparatus in the fourth time period;
receiving, by the first apparatus, first indication information from the second apparatus, wherein the first indication information is used to indicate that a correspondence between a plurality of areas within a coverage area of the second apparatus and the plurality of SSBs changes.

12. The method according to any one of claims 1 to 11, wherein the method further comprises:
receiving, by the first apparatus, second indication information from the second apparatus, wherein the second indication information is used to indicate whether the correspondence between the plurality of areas within the coverage area of the second apparatus and the plurality of SSBs is variable.

13. The method according to claim 12, wherein a value of the second indication information belongs to a first value range, the value of the second indication information is used to indicate that a correspondence between a plurality of areas in the coverage area of the second apparatus and the plurality of SSBs remains unchanged, and is used to indicate the correspondence between the plurality of areas in the coverage area of the second apparatus and the plurality of SSBs.

14. A communication method, comprising:
determining, by a second apparatus, first information;
sending, by the second apparatus, first information to a first apparatus, wherein the first information is used to determine a first correspondence, the first correspondence is a correspondence between a plurality of first areas and a plurality of synchronization signal and physical broadcast channel PBCH block SSBs within a first time period, the plurality of first areas are a plurality of areas within the coverage area of the second apparatus in the first time period, the first correspondence is used to determine a second correspondence, the second correspondence is a correspondence between a plurality of second areas and the plurality of SSBs within a second time period, the second time period is after the first time period, and the plurality of second areas are a plurality of areas within the coverage area of the second apparatus in the second time period.

15. The method according to claim 14, wherein the start time of the first time period, the duration of the first time period, and the first correspondence are used to determine the second correspondence.

16. The method according to claim 15, wherein the first correspondence comprises M rows and N columns, wherein M is a quantity of areas covered by the second apparatus and located along a first direction, N is a quantity of areas covered by the second apparatus and located along a second direction, the first direction is a movement direction of the second apparatus, and M and N are positive integers; the second correspondence comprises M rows and N columns, wherein the last K rows in the first correspondence are the first K rows in the second correspondence, and the first M-K rows in the first correspondence are the last M-K rows in the second correspondence, wherein K is determined based on a quantity of areas that the second apparatus crosses from the first time period to the second time period.

17. The method according to claim 15 or 16, further comprising at least one of the following:
sending, by the second apparatus, second information to the first apparatus, wherein the second information is used to indicate the duration; or
sending, by the second apparatus, third information to the first apparatus, wherein the third information is used to indicate a radius, a diameter, or a side length of an area in which the first apparatus is located in the plurality of first areas, and the radius, the diameter, or the side length of the area in which the first apparatus is located is used to determine the duration.

18. The method according to any one of claims 15 to 17, further comprising:
sending, by the second apparatus, fourth information to the first apparatus, wherein the fourth information is used to indicate a start time of the first time period.

19. The method according to any one of claims 14 to 18, further comprising:
during cell search and/or random access of the first apparatus, sending, by the second apparatus, fifth information to the first apparatus, wherein the fifth information is used to determine a third correspondence, the third correspondence being a correspondence between a plurality of third areas and the plurality of SSBs in a third time period, and the plurality of third areas being a plurality of areas within the coverage area of the second apparatus in the third time period;
the first information is received by the first apparatus when the first apparatus completes random access.

20. The method according to claim 19, wherein the first information is received by the first apparatus after a first time length following completion of random access by the first apparatus, wherein the first time length is determined according to the location of the first apparatus at a second time, the coverage area of the area in which the first apparatus is located, and the location information of the second apparatus, and the second time is related to a time at which the first apparatus receives the first information.

21. The method according to claim 19, wherein the first information is received by the first apparatus after a first time length elapses after the first apparatus completes random access, the first time length is determined based on a first parameter, a first range, and the location information of the second apparatus, the first parameter is determined based on a connection line between a first point of a second time and the second apparatus, the first point is a reference point in an area where the first apparatus is located, the first range is a range of a parameter determined based on the connection line between the first point and the second apparatus when the first apparatus is located in the area where the first apparatus is located, and the second time is related to a time when the first apparatus receives the first information.

22. The method according to claim 21, wherein the method further comprises:
sending, by the second apparatus, range indication information to the first apparatus, wherein the range indication information is used to indicate the first range.

23. The method according to claim 21 or 22, wherein the first parameter is an included angle between the line connecting the first point and the second apparatus at the second time and a reference plane, and the first range is a range of the included angle between the line connecting the first point and the second apparatus and the reference plane when the first apparatus is located in an area in which the first apparatus is located; or
the first parameter is a length of the line connecting the first point and the second apparatus at the second time after being mapped to the reference plane, and the first range is a range of the length of the line connecting the first point and the second apparatus after being mapped to the reference plane when the first apparatus is located in an area in which the first apparatus is located.

24. The method according to any one of claims 15 to 17, wherein before the second apparatus sends first information to the first apparatus, the method further comprises:
sending, by the second apparatus, sixth information to the first apparatus, wherein the sixth information is used to determine a fourth correspondence, the fourth correspondence is a correspondence between a plurality of fourth areas and the plurality of SSBs within a fourth time period, and the plurality of fourth areas are a plurality of areas within coverage of the second apparatus within the fourth time period; and
sending, by the second apparatus, first indication information to the first apparatus, wherein the first indication information is used to indicate that a correspondence between a plurality of areas within the coverage area of the second apparatus and the plurality of SSBs changes.

25. The method according to any one of claims 14 to 24, further comprising:
sending, by the second apparatus, second indication information to the first apparatus, wherein the second indication information is used to indicate whether a correspondence between a plurality of areas within the coverage area of the second apparatus and the plurality of SSBs is variable.

26. The method according to claim 25, wherein a value of the second indication information belongs to a first value range, the value of the second indication information is used to indicate that a correspondence between a plurality of areas within the coverage area of the second apparatus and the plurality of SSBs remains unchanged, and is used to indicate the correspondence between the plurality of areas within the coverage area of the second apparatus and the plurality of SSBs.

27. A communication apparatus, comprising a unit configured to perform the method according to any one of claims 1 to 13, or comprising a unit configured to perform the method according to any one of claims 14 to 26.

28. A communication apparatus, comprising a processor, wherein the processor executes instructions to cause the apparatus to perform the method according to any one of claims 1 to 13, or to cause the apparatus to perform the method according to any one of claims 14 to 26.

29. A computer-readable storage medium, wherein the computer-readable storage medium stores a computer program or instructions, and when the computer program or instructions are executed, the method according to any one of claims 1 to 26 is implemented.
